# EUROPÄISCHE PATENTSCHRIFT

(11) **EP 4 071 389 B1**
(45) Veröffentlichungstag und Bekanntmachung des Hinweises auf die Patenterteilung: **31.01.2024**
(21) Anmeldenummer: 22165444.5
(22) Anmeldetag: 30.03.2022
(51) Int. Cl.: F16K 5/04, F16K 27/06, F16K 11/085

(54) **FLUIDVENTILANORDNUNG**
FLUID VALVE ASSEMBLY
DISPOSITIF DE SOUPAPE DE FLUIDE

(30) Priorität: 08.04.2021 DE 102021108801
(43) Veröffentlichungstag der Anmeldung: 12.10.2022
(73) Patentinhaber: VERITAS AG, 63571 Gelnhausen (DE)
(72) Erfinder: HATTASS, Dirk, 63584 Gruendau (DE); GEESMANN, Urs, 63571 Gelnhausen (DE); GRASMUECK, Thomas, 63549 Ronneburg (DE); BERGMANN, Stefan, 63755 Alzenau (DE); BRUNETTI, Claudio, 63579 Freigericht (DE)
(74) Vertreter: Patentship Patentanwaltsgesellschaft mbH

(56) Entgegenhaltungen:
- US-A- 3 563 265
- US-A1- 2014 049 042
- US-A1- 2021 054 944
- US-B2- 10 494 983

## Beschreibung

Die vorliegende Erfindung betrifft ein Fluidventilanordnung.

Herkömmliche Fluidventilanordnungen dienen zum Verbinden von Fluidleitungen in einer Vielzahl von fluidführenden Systemen, insbesondere in fluidführenden Systemen eines Fahrzeuges. In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch entsprechende Fluidventilanordnungen miteinander verbunden werden, um eine wirksame Fluidleitung zu bewirken. Hierbei werden an die Fluidventilanordnungen entsprechend hohe Anforderungen in Bezug auf Stabilität und Fluiddichtigkeit gestellt.

Herkömmliche Fluidventilanordnungen bestehen oftmals aus einer Vielzahl von unterschiedlichen Bauteilen, welche oftmals mit einem hohen Montageaufwand zusammengebaut werden müssen, und damit oftmals hohe Herstellungs- und Fertigungskosten aufweisen. US3563265A offenbart ein Beispiel einer Fluidventilanordnung und US10494983B2 offenbart eine Fluidventilanordnung gemäß dem Oberbegriff des Anspruchs 1.

Es ist die der Erfindung zugrundeliegende Aufgabe, eine Fluidventilanordnung anzugeben, welche vorteilhafte Eigenschaften aufweist und einfach zu fertigen ist.

Diese Aufgabe wird durch die Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Fluidventilanordnung gelöst, umfassend ein Ventilgehäuse, welches einen Gehäuseinnenraum begrenzt, wobei das Ventilgehäuse zumindest zwei Gehäuseöffnungen aufweist, welche jeweils den Gehäuseinnenraum mit einem Außenraum der Fluidventilanordnung fluidtechnisch verbinden, wobei die jeweilige Gehäuseöffnung jeweils durch einen Öffnungsrand des Ventilgehäuses begrenzt wird, einen Ventilkolben, welcher drehbar in dem Gehäuseinnenraum angeordnet und ausgebildet ist, die zumindest zwei Gehäuseöffnungen in Abhängigkeit einer Kolbenstellung des Ventilkolbens zumindest teilweise fluidtechnisch zu sperren oder zumindest teilweise fluidtechnisch freizugeben, zumindest zwei Dichtungsanordnungen, wobei jeweils eine der zumindest zwei Dichtungsanordnungen in jeweils einer der zumindest zwei Gehäuseöffnungen angeordnet ist, zumindest zwei Gehäusestutzen, wobei jeweils einer der zumindest zwei Gehäusestutzen an jeweils einer der zumindest zwei Gehäuseöffnungen angeordnet und ausgebildet ist an der jeweiligen Dichtungsanordnung anzuliegen, und einen Gehäusedeckel, welcher an dem Ventilgehäuse befestigt ist, wobei der Gehäusedeckel zumindest zwei Deckelabschnitte aufweist, wobei jeweils einer der zumindest zwei Deckelabschnitte an jeweils einem der zumindest zwei Gehäusestutzen anliegt, und ausgebildet ist, den jeweiligen Gehäusestutzen mit einer Kraft zu beaufschlagen, um den jeweiligen Gehäusestutzen und die jeweils daran anliegende Dichtungsanordnung gegen den Ventilkolben und den jeweiligen Öffnungsrand des Ventilgehäuses zu pressen, um eine fluidtechnische Abdichtung zwischen dem Ventilkolben und dem jeweiligen Öffnungsrand des Ventilgehäuses zu bewirken.

Dadurch wird beispielsweise der technische Vorteil erreicht, dass die Dichtungsanordnung durch den Gehäusedeckel wirksam in der jeweiligen Gehäuseöffnung befestigt wird. Hierbei presst der jeweilige Deckelabschnitt des Gehäusedeckels gegen den jeweiligen Gehäusestutzen, welcher wiederum gegen die an dem jeweiligen Gehäusestutzen anliegende jeweilige Dichtungsanordnung presst, so dass die jeweilige Dichtungsanordnung wiederum für eine wirksame fluidtechnische Abdichtung gegen den Ventilkolben und den jeweiligen Öffnungsrand des Ventilgehäuses gepresst wird.

Dadurch wird der technische Vorteil erreicht, dass durch die Deckelabschnitte des Gehäusedeckels ferner eine wirksame Halterung des jeweiligen Gehäusestutzens an der jeweiligen Gehäuseöffnung erreicht wird, und zudem ferner eine wirksame Halterung der jeweiligen Dichtungsanordnung innerhalb der jeweiligen Gehäuseöffnung erreicht wird.

Dadurch kann insbesondere auf ein aufwendiges Verschweißen der Gehäusestutzen und der Dichtungsanordnungen an dem Ventilgehäuse verzichtet werden, wodurch Kosten bei der Montage der Fluidventilanordnung eingespart werden können. Lediglich eine wirksame Befestigung des Gehäusedeckels an dem Ventilgehäuse muss sichergestellt werden.

Zudem kann durch die Deckelabschnitte des Gehäusedeckels eine besonders wirksame Vorspannung auf die jeweilige Dichtungsanordnung ausgeübt werden, wodurch sich eine Reduzierung von Toleranzketten ergibt.

Insbesondere ist der Gehäusedeckel als ein das Ventilgehäuse zumindest abschnittsweise, insbesondere vollständig umlaufender Gehäusedeckel ausgebildet.

Insbesondere weist der Gehäusedeckel einen Deckeloberbereich auf, welcher an einer Oberseite des Ventilgehäuses anliegt, wobei sich insbesondere die zumindest zwei Deckelabschnitte von dem Deckeloberbereich aus erstrecken. Jeweils einer der zumindest zwei Deckelabschnitte liegt insbesondere jeweils an einer Lateralseite von zumindest zwei Lateralseiten des Ventilgehäuses an. Jeweils einer der zumindest zwei Deckelabschnitte liegt jeweils an einem Gehäusestutzen der zumindest zwei Gehäusestutzen an.

Somit greifen die zumindest zwei Deckelabschnitte des Gehäusedeckels insbesondere über die jeweiligen Lateralseiten des Ventilgehäuses über und fixieren dabei die an den jeweiligen Gehäuseöffnungen angeordneten Gehäusestutzen an dem Ventilgehäuse, bzw. pressen die an den jeweiligen Gehäuseöffnungen angeordneten Gehäusestutzen in die jeweilige Gehäuseöffnung.

Insbesondere ist jeweils eine der zumindest zwei Gehäuseöffnungen an jeweils einer von zwei gegenüberliegenden Lateralseiten des Ventilgehäuses angeordnet und ist insbesondere jeweils einer der zumindest zwei Deckelabschnitte an jeweils einer der gegenüberliegenden Lateralseiten des Ventilgehäuses angeordnet.

Insbesondere sind die zumindest zwei Deckelabschnitte einstückig mit dem Gehäusedeckel gebildet. Insbesondere sind die zumindest zwei Deckelabschnitte einstückig mit dem Deckeloberbereich des Gehäusedeckels gebildet.

Insbesondere kann das Ventilgehäuse, insbesondere eine Oberseite des Ventilgehäuses, eine Deckelöffnung aufweisen, durch welche der Ventilkolben in das Ventilgehäuse eingebracht werden kann. Der Gehäusedeckel, insbesondere der Deckeloberbereich des Gehäusedeckels, verschließt hierbei insbesondere die Deckelöffnung. Insbesondere weist das Ventilgehäuse eine obere Abschlussplatte auf, welche an dem Deckeloberbereich des Gehäusedeckels angeordnet ist, und mit dem Gehäusedeckel und/oder dem Gehäusestutzen verschweißt ist.

Alternativ kann das Ventilgehäuse, insbesondere in einer Unterseite des Ventilgehäuses, eine Bodenöffnung aufweisen, durch welche der Ventilkolben in das Ventilgehäuse eingebracht werden kann.

Insbesondere weist der Ventilkolben einen Antriebsschaft auf, welcher durch einen Kolbenantrieb, insbesondere Elektromotor, drehbar ist. Insbesondere erstreckt sich der Antriebsschaft durch die Deckelöffnung des Ventilgehäuses und durch eine Gehäusedeckelöffnung des Gehäusedeckels. Alternativ erstreckt sich der Antriebsschaft durch eine der Deckelöffnung abgewandte Bodenöffnung des Ventilgehäuses, und ermöglicht somit eine Anordnung des Kolbenantriebs, insbesondere Elektromotor, an der Unterseite des Ventilgehäuses.

Insbesondere ist der Gehäusedeckel nicht lösbar, insbesondere verschweißt, an dem Ventilgehäuse befestigt. Insbesondere ist der Gehäusedeckel lösbar, insbesondere kraftschlüssig, insbesondere durch eine Rastverbindung oder durch eine Clipverbindung, und/oder formschlüssig an dem Ventilgehäuse befestigt.

Die insbesondere lösbare Verbindung zwischen dem Gehäusedeckel und dem Ventilgehäuse ist insbesondere dadurch gekennzeichnet, dass die lösbare Verbindung ohne Beschädigung des Gehäusedeckels und des Ventilgehäuses gelöst werden kann, um den Gehäusedeckel von dem Ventilgehäuse zu entfernen, beispielsweise bei einer Demontage der Fluidventilanordnung. Beispielsweise kann die lösbare Verbindung zwischen dem Gehäusedeckel und dem Ventilgehäuse durch zumindest einen Rastarm des jeweiligen Gehäusedeckels realisiert werden, welcher in eine entsprechende Rastaufnahme des Ventilgehäuses eingreift.

Die Fluidventilanordnung umfasst insbesondere eine Mehrwege-Fluidventilanordnung, welche zumindest zwei Gehäuseöffnungen, insbesondere eine Mehrzahl von Gehäuseöffnungen, insbesondere zwei, drei, vier, fünf, sechs, sieben, acht, neun oder zehn Gehäuseöffnungen aufweist.

Der Ventilkolben der Fluidventilanordnung, insbesondere der Mehrwege-Fluidventilanordnung, ist drehbar in dem Gehäuseinnenraum angeordnet und kann, insbesondere durch einen Elektromotor der Fluidventilanordnung, in unterschiedliche Kolbenstellungen gedreht werden.

Der Ventilkolben der Fluidventilanordnung weist hierbei insbesondere einen Fluidkanal auf, welcher ausgebildet ist in Abhängigkeit der Kolbenstellung des Ventilkolbens die zumindest zwei Gehäuseöffnungen zumindest teilweise fluidtechnisch zu sperren oder zumindest teilweise fluidtechnisch freizugeben.

Eine zumindest teilweise fluidtechnische Freigabe von jeweils zwei der zumindest zwei Gehäuseöffnungen kann durch den Ventilkolben insbesondere dadurch erreicht werden, dass die jeweiligen zwei Gehäuseöffnungen durch den Fluidkanal des Ventilkolbens zumindest teilweise miteinander fluidtechnisch verbunden werden. Eine zumindest teilweise fluidtechnische Freigabe umfasst entweder eine vollständige oder teilweise fluidtechnische Freigabe der jeweiligen Gehäuseöffnungen durch den Ventilkolben.

Ein zumindest teilweise fluidtechnisches Sperren von jeweils zwei der zumindest zwei Gehäuseöffnungen kann durch den Ventilkolben insbesondere dadurch erreicht werden, dass die zumindest zwei Gehäuseöffnungen durch den Ventilkolben zumindest teilweise fluidtechnisch voneinander getrennt sind. Ein zumindest teilweises fluidtechnisches Sperren umfasst entweder ein vollständiges oder teilweises fluidtechnisches Sperren der jeweiligen Gehäuseöffnungen durch den Ventilkolben.

Wenn das Ventilgehäuse jedoch mehr als zwei, insbesondere vier, sechs, acht, oder zehn Gehäuseöffnungen aufweist, kann der Ventilkolben in einer Kolbenstellung des Ventilkolbens eine erste Untergruppe von jeweils zwei Gehäuseöffnungen der mehr als zwei Gehäuseöffnungen zumindest teilweise fluidtechnisch sperren und eine zweite Untergruppe von jeweils zwei Gehäuseöffnungen der mehr als zwei Gehäuseöffnungen zumindest teilweise fluidtechnisch freigeben, bzw. kann der Ventilkolben in einer anderen Kolbenstellung des Ventilkolbens die erste Untergruppe von jeweils zwei Gehäuseöffnungen der mehr als zwei Gehäuseöffnungen zumindest teilweise fluidtechnisch freigeben und die zweite Untergruppe von jeweils zwei Gehäuseöffnungen der mehr als zwei Gehäuseöffnungen zumindest teilweise fluidtechnisch sperren.

Dies wird im Nachfolgenden für eine Vier-Wege-Fluidventilanordnung detailliert beschrieben.

In einer vorteilhaften Ausführungsform weist das Ventilgehäuse vier Gehäuseöffnungen auf, wobei der Ventilkolben ausgebildet ist in einer ersten Kolbenstellung eine erste Untergruppe von jeweils zwei Gehäuseöffnungen der vier Gehäuseöffnungen zumindest teilweise fluidtechnisch zu sperren und eine zweite Untergruppe von jeweils zwei Gehäuseöffnungen der vier Gehäuseöffnungen zumindest teilweise fluidtechnisch freizugeben, und wobei der Ventilkolben ausgebildet ist in einer zweiten Kolbenstellung die zweite Untergruppe von jeweils zwei Gehäuseöffnungen der vier Gehäuseöffnungen zumindest teilweise fluidtechnisch zu sperren und die erste Untergruppe von jeweils zwei Gehäuseöffnungen der vier Gehäuseöffnungen zumindest teilweise fluidtechnisch freizugeben, wobei die Fluidventilanordnung vier Dichtungsanordnungen aufweist, welche jeweils in einer der vier Gehäuseöffnungen angeordnet sind.

Dadurch wird der technische Vorteil erreicht, dass eine wirksame Vier-Wege-Fluidventilanordnung bereitgestellt wird.

Der Ventilkolben ist hierbei zwischen der ersten und zweiten Kolbenstellung drehbar.

In der ersten Kolbenstellung gibt der Ventilkolben, insbesondere ein Fluidkanal des Ventilkolbens, jeweils zwei der vier Gehäuseöffnungen zumindest teilweise fluidtechnisch frei, insbesondere eine erste und zweite Gehäuseöffnung (Alternative 1), eine erste und dritte Gehäuseöffnung (Alternative 2), oder eine erste und vierte Gehäuseöffnung (Alternative 3), und sperrt der Ventilkolben die beiden anderen der vier Gehäuseöffnungen zumindest teilweise fluidtechnisch, insbesondere die dritte und vierte Gehäuseöffnung (Alternative 1), die zweite und vierte Gehäuseöffnung (Alternative 2), oder die zweite und dritte Gehäuseöffnung (Alternative 3).

In der zweiten Kolbenstellung gibt der Ventilkolben, insbesondere ein Fluidkanal des Ventilkolbens, die beiden anderen der vier Gehäuseöffnungen zumindest teilweise fluidtechnisch frei, insbesondere die dritte und vierte Gehäuseöffnung (Alternative 1), die zweite und vierte Gehäuseöffnung (Alternative 2), oder die zweite und dritte Gehäuseöffnung (Alternative 3), und sperrt der Ventilkolben die zwei der vier Gehäuseöffnungen zumindest teilweise fluidtechnisch, insbesondere die erste und zweite Gehäuseöffnung (Alternative 1), die erste und dritte Gehäuseöffnung (Alternative 2), oder die erste und vierte Gehäuseöffnung (Alternative 3).

Somit werden in Abhängigkeit der Kolbenstellung des drehbaren Ventilkolbens jeweils zwei der vier Gehäuseöffnungen zumindest teilweise fluidtechnisch gesperrt oder zumindest teilweise fluidtechnisch freigegeben.

Insbesondere sind die erste und vierte Gehäuseöffnung, sowie die zwei und dritte Gehäuseöffnung jeweils gegenüberliegend in dem Ventilgehäuse angeordnet. Insbesondere erstreckt sich ein Fluidkanal des Ventilkolbens gerade durch den Ventilkolben, wodurch in Abhängigkeit der Kolbenstellung des drehbaren Ventilkolbens die jeweils gegenüberliegende erste und vierte, bzw. zweite und dritte Gehäuseöffnung entweder zumindest teilweise fluidtechnisch freigegeben oder zumindest teilweise fluidtechnisch gesperrt werden.

Alternativ erstreckt sich der Fluidkanal insbesondere winklig in dem Ventilkolben, wodurch in Abhängigkeit der Kolbenstellung des drehbaren Ventilkolbens die jeweils benachbarte erste und zweite Gehäuseöffnung, oder die benachbarte erste und dritte Gehäuseöffnung, oder die benachbarte zweite und vierte Gehäuseöffnung zumindest teilweise fluidtechnisch gesperrt oder zumindest teilweise fluidtechnisch freigegeben werden kann.

Dadurch, dass in jeder der vier Gehäuseöffnungen jeweils eine Dichtungsanordnung angeordnet ist, kann eine wirksame fluidtechnische Abdichtung für alle Gehäuseöffnungen sichergestellt werden.

In einer vorteilhaften Ausführungsform sind jeweils zwei der zumindest zwei, insbesondere vier Gehäuseöffnungen, an jeweils gegenüberliegenden Lateralseiten des Ventilgehäuses angeordnet, wobei der Gehäusedeckel als ein das Ventilgehäuse zumindest abschnittsweise, insbesondere vollständig umlaufender Gehäusedeckel ausgebildet ist, und wobei jeweils zwei der zumindest zwei, insbesondere vier, Deckelabschnitte des Gehäusedeckels an den jeweils gegenüberliegenden Lateralseiten des Ventilgehäuses angeordnet sind, um den jeweiligen Gehäusestutzen, welcher an der jeweiligen Gehäuseöffnung angeordnet ist, mit einer Kraft zu beaufschlagen.

Dadurch wird der technische Vorteil erreicht, dass die an jeweils gegenüberliegenden Lateralseiten des Ventilgehäuses angeordneten Deckelabschnitte des Gehäusedeckels die entsprechenden sich jeweils gegenüberliegenden Gehäusestutzen somit aus entgegengesetzten Richtungen mit jeweils einer Kraft beaufschlagen, um eine wirksame Fixierung der Gehäusestutzen an dem Ventilgehäuse sicherstellen.

In einer vorteilhaften Ausführungsform weisen die Gehäusestutzen jeweils einen Stutzeninnenabschnitt auf, welcher in der jeweiligen Gehäuseöffnung angeordnet ist, und an der jeweiligen Dichtungsanordnung anliegt, wobei der jeweilige Stutzeninnenabschnitt eine Stutzenaußenseite aufweist, welche einem Außenraum des Ventilgehäuses zugewandt ist, wobei jeweils ein Deckelabschnitt an jeweils einer Stutzenaußenseite des jeweiligen Stutzeninnenabschnitts anliegt, um den jeweiligen Gehäusestutzen mit einer Kraft zu beaufschlagen.

Dadurch wird der technische Vorteil erreicht, dass die Stutzenaußenseite des jeweiligen Stutzeninnenabschnitts des jeweiligen Gehäusestutzens eine wirksame Anlagefläche für den jeweiligen Deckelabschnitt des Gehäusedeckels darstellt, um eine Kraft auf den Gehäusestutzen auszuüben, welche den jeweiligen Gehäusestutzen und die daran jeweils anliegende Dichtungsanordnung gegen den Ventilkolben und den jeweiligen Öffnungsrand presst.

Insbesondere weisen die Gehäusestutzen jeweils einen Stutzenaußenabschnitt auf, welcher außerhalb der jeweiligen Gehäuseöffnung angeordnet ist, wobei sich der Stutzenaußenabschnitt insbesondere zumindest abschnittsweise parallel oder zumindest abschnittsweise winklig, insbesondere rechtwinklig, zu der Gehäuseöffnung erstreckt. Der Stutzenaußenabschnitt dient insbesondere zur fluidtechnischen Anbindung an eine Fluidleitung und/oder an ein Fluidverteilungselement.

Insbesondere ist zwischen dem jeweiligen Stutzeninnenabschnitt und dem jeweiligen Öffnungsrand ein weiteres Dichtungselement, insbesondere ein Dichtungsring, angeordnet, welches eine fluidtechnische Abdichtung zwischen dem jeweiligen Öffnungsrand und dem jeweiligen Stutzeninnenabschnitt sicherstellt.

Insbesondere weist der Gehäusedeckel der Fluidventilanordnung zumindest zwei, insbesondere vier Deckelabschnitte auf, wobei jeweils ein Deckelabschnitt der zumindest zwei, insbesondere vier Deckelabschnitte, an jeweils einem der zumindest zwei, insbesondere vier, Gehäusestutzen anliegt, insbesondere an einer Stutzenaußenseite des jeweiligen Stutzeninnenabschnitts anliegt.

In einer vorteilhaften Ausführungsform weist der jeweilige Öffnungsrand zumindest einen Befestigungsanschlag auf, an welchen die jeweilige Dichtungsanordnung durch den Gehäusedeckel angepresst wird, um eine fluidtechnisch dichtende Verbindung zwischen der jeweiligen Dichtungsanordnung und dem jeweiligen Öffnungsrand des Ventilgehäuses bereitzustellen.

Dadurch wird der technische Vorteil erreicht, dass der jeweilige Deckelabschnitt des Gehäusedeckels den jeweiligen Gehäusestutzen mit einer Kraft beaufschlagt, so dass der jeweilige Gehäusestutzen wiederum gegen die jeweils daran anliegende Dichtungsanordnung presst, welche dann wiederum gegen den Befestigungsanschlag des Ventilgehäuses gepresst wird, um eine wirksame fluidtechnische Abdichtung an dem jeweiligen Öffnungsrand zu erreichen.

Insbesondere wird ein ringförmiges Dichtungselement der jeweiligen Dichtungsanordnung, insbesondere eine erste Dichtungslippe des ringförmigen Dichtungselements, gegen den Befestigungsanschlag des Ventilgehäuses gepresst.

In einer vorteilhaften Ausführungsform weisen die Dichtungsanordnungen jeweils ein hülsenförmiges Befestigungselement auf, an welchem der jeweilige Gehäusestutzen anliegt, und weisen die Dichtungsanordnungen jeweils ein ringförmiges Dichtungselement auf, welches insbesondere an einer dem Gehäuseinnenraum zugewandten Seite des jeweiligen hülsenförmigen Befestigungselements angeordnet ist, wobei das jeweilige ringförmige Dichtungselement fluidtechnisch dichtend an dem Ventilkolben und an dem Öffnungsrand der jeweiligen Gehäuseöffnung anliegt, insbesondere an dem Ventilkolben und an dem jeweiligen Befestigungsanschlag des jeweiligen Öffnungsrands anliegt.

Dadurch wird der technische Vorteil erreicht, dass das hülsenförmige Befestigungselement eine wirksame strukturelle Stabilität der jeweiligen Dichtungsanordnung bereitstellt und zudem eine wirksame Anlagefläche für den jeweiligen Gehäusestutzen darstellt, welcher wiederum gegen die jeweilige Dichtungsanordnung gepresst wird, so dass das ringförmige Dichtungselement der jeweiligen Dichtungsanordnung eine wirksame fluidtechnische Abdichtung gegenüber dem Ventilkolben und dem jeweiligen Öffnungsrand bereitstellt.

Insbesondere besteht das jeweilige ringförmige Dichtungselement aus einem ZweiKomponenten-Kunststoff, insbesondere aus einer Mischung aus einem Elastomer, insbesondere Ethylen-Propylen-Dien-Kautschuk (EPDM) oder Ethylen-Acrylat-Kautschuk (AEM), und einem Thermoplast, insbesondere Polytetrafluorethylen (PTFE).

Insbesondere ist das hülsenförmige Befestigungselement an einer dem Gehäuseinnenraum abgewandten Seite, bzw. an einer dem jeweiligen Gehäusestutzen zugewandten Seite, der jeweiligen Dichtungsanordnung angeordnet.

Insbesondere besteht die jeweilige Dichtungsanordnung ausschließlich aus dem jeweiligen hülsenförmigen Befestigungselement und dem jeweiligen ringförmigen Dichtungselement. Dadurch wird der technische Vorteil erreicht, dass eine vorteilhafte Vereinfachung der jeweiligen Dichtungsanordnung dadurch erreicht wird, dass nur zwei Bauteile verwendet werden.

In einer vorteilhaften Ausführungsform weist das jeweilige hülsenförmige Befestigungselement einen inneren Hülsenabschnitt, welcher einen Hülsendurchbruch des jeweiligen hülsenförmigen Befestigungselements begrenzt, und einen äußeren Hülsenabschnitt, welcher an dem jeweiligen Öffnungsrand des Ventilgehäuses anliegt, auf, wobei der äußere Hülsenabschnitt insbesondere mit dem jeweiligen Öffnungsrand verbunden ist.

Dadurch wird der technische Vorteil erreicht, dass der innere Hülsenabschnitt den Hülsendurchbruch zum Leiten des Fluids vorteilhaft begrenzt, und dass der äußere Hülsenabschnitt eine wirksame Anlage an dem jeweiligen Öffnungsrand des Ventilgehäuses erreicht.

Insbesondere liegt der jeweilige innere Hülsenabschnitt bündig an dem jeweiligen Gehäusestutzen, insbesondere dem Stutzeninnenabschnitt des jeweiligen Gehäusestutzens, an.

Insbesondere umfasst die Verbindung zwischen dem jeweiligen äußeren Hülsenabschnitt und dem jeweiligen Öffnungsrand eine formschlüssige oder kraftschlüssige Verbindung, insbesondere eine Rastverbindung.

Eine formschlüssige oder kraftschlüssige Verbindung, insbesondere Rastverbindung ermöglicht zum einen eine wirksame Befestigung des jeweiligen hülsenförmigen Befestigungselements an dem jeweiligen Öffnungsrand des Ventilgehäuses, und ermöglicht zum anderen einen Toleranzausgleich, wenn der jeweilige Gehäusestutzen gegen das hülsenförmige Befestigungselement gepresst wird.

Eine formschlüssige oder kraftschlüssige Verbindung zwischen dem jeweiligen äußeren Hülsenabschnitt und dem jeweiligen Öffnungsrand kann insbesondere in einer entsprechenden Lösestellung, insbesondere durch ein Spreizen des Rastarms, wirksam wieder gelöst werden, ohne hierbei den äußeren Hülsenabschnitt oder den Öffnungsrand zu beschädigen.

Insbesondere ist das jeweilige ringförmige Dichtungselement mit dem jeweiligen hülsenförmigen Befestigungselement durch eine kraftschlüssige und/oder formschlüssige Verbindung verbunden, oder ist insbesondere das jeweilige ringförmige Dichtungselement mit dem jeweiligen hülsenförmigen Befestigungselement durch eine stoffschlüssige Verbindung verbunden.

Dadurch wird der technische Vorteil erreicht, dass eine wirksame Befestigung des jeweiligen ringförmigen Dichtungselements mit dem jeweiligen hülsenförmigen Befestigungselement erreicht wird. Die insbesondere kraftschlüssige und/oder formschlüssige Befestigung zwischen dem hülsenförmigen Befestigungselement und dem ringförmigen Dichtungselement kann insbesondere durch einen Pressdruck des Gehäusedeckels auf den jeweiligen Gehäusestutzen der Fluidventilanordnung sichergestellt werden, wobei der Pressdruck durch das an dem Gehäusestutzen anliegende jeweilige hülsenförmige Befestigungselement an das ringförmige Dichtungselement weitergeleitet wird.

Insbesondere ist zwischen dem inneren Hülsenabschnitt und dem äußeren Hülsenabschnitt ein dem Gehäuseinnenraum zugewandter Aufnahmebereich angeordnet, in welchem das jeweilige ringförmige Dichtungselement zumindest abschnittsweise aufgenommen ist.

Der insbesondere vorhandene Aufnahmebereich, in welchem das jeweilige ringförmige Dichtungselement zumindest abschnittsweise aufgenommen ist, wird insbesondere durch den inneren Hülsenabschnitt, insbesondere einem inneren Hülsenvorsprung, welcher dem Gehäuseinnenraum des Ventilgehäuses zugewandt ist, begrenzt, wobei das ringförmige Dichtungselement zumindest abschnittsweise an dem inneren Hülsenabschnitt, insbesondere dem inneren Hülsenvorsprung, anliegt.

Der insbesondere vorhandene Aufnahmebereich, in welchem das jeweilige ringförmige Dichtungselement zumindest abschnittsweise aufgenommen ist, wird insbesondere durch den äußeren Hülsenabschnitt, insbesondere einem Anlegeabschnitt, welcher sich winklig von dem inneren Hülsenabschnitt erstreckt, begrenzt, wobei das ringförmige Dichtungselement zumindest abschnittsweise an dem äußeren Hülsenabschnitt, insbesondere Anlegeabschnitt anliegt.

Der insbesondere vorhandene Aufnahmebereich, in welchem das jeweilige ringförmige Dichtungselement zumindest abschnittsweise aufgenommen ist, wird insbesondere durch einen Befestigungsanschlag des Öffnungsrands begrenzt, wobei das ringförmige Dichtungselement zumindest abschnittsweise an dem Befestigungsanschlag anliegt.

Insbesondere weist das jeweilige hülsenförmige Befestigungselement eine Hülsenaußenseite auf, welche an einer der jeweiligen Gehäuseöffnung zugewandten Randinnenseite des jeweiligen Öffnungsrands anliegt, insbesondere formschlüssig oder kraftschlüssig anliegt.

Dadurch wird der technische Vorteil erreicht, dass durch die an der Randinnenseite des jeweiligen Öffnungsrands anliegende Hülsenaußenseite eine vorteilhafte und stabile Befestigung des jeweiligen hülsenförmigen Befestigungselements an dem jeweiligen Öffnungsrand sichergestellt wird.

Insbesondere weist das jeweilige hülsenförmige Befestigungselement, insbesondere die Hülsenaußenseite, zumindest zwei Rastarme, insbesondere drei Rastarme, auf, welche jeweils in eine Rastaufnahme des jeweiligen Öffnungsrands, insbesondere einer Randinnenseite, eingreifen, um das jeweilige hülsenförmige Befestigungselement kraftschlüssig an dem jeweiligen Öffnungsrand zu befestigen, oder weist der jeweiligen Öffnungsrand, insbesondere eine Randinnenseite, zumindest zwei Rastarme, insbesondere drei Rastarme, auf, welche jeweils in eine Rastaufnahme des jeweiligen hülsenförmigen Befestigungselements eingreifen, um das jeweilige hülsenförmige Befestigungselement kraftschlüssig an dem jeweiligen Öffnungsrand zu befestigen.

Dadurch wird der technische Vorteil erreicht, dass durch das Eingreifen der entweder an dem jeweiligen Öffnungsrand oder an dem hülsenförmigen Befestigungselement angeordneten Rastarme in die entsprechende entweder an dem hülsenförmigen Befestigungselement oder an dem jeweiligen Öffnungsrand angeordnete Rastaufnahme, eine wirksame kraftschlüssige Verbindung zwischen dem jeweiligen hülsenförmigen Befestigungselement und dem jeweiligen Öffnungsrand erreicht werden kann.

Insbesondere sind die Rastarme federelastisch ausgebildet. Insbesondere weisen die Rastarme an einem Ende jeweils einen Rastvorsprung auf, welcher ausgebildet ist, in die Rastaufnahme einzugreifen.

Insbesondere liegt der zumindest eine Gehäusedeckel, insbesondere der Stutzeninnenabschnitt, an dem jeweiligen Rastarm an, insbesondere an einer dem jeweiligen Öffnungsrand abgewandten Seite des jeweiligen Rastarms an, um ein Ausfedern des jeweiligen Rastarms aus der jeweiligen Rastaufnahme zu verhindern.

Dadurch wird der technische Vorteil erreicht, dass eine wirksame Verspannung zwischen dem Gehäusedeckel und dem jeweiligen Rastarm erreicht wird, um eine wirksame Kraftübertragung von dem Gehäusedeckel über den jeweiligen Rastarm auf das jeweilige ringförmige Dichtungselement zu erreichen.

In einer vorteilhaften Ausführungsform weist das jeweilige ringförmige Dichtungselement eine erste Dichtungslippe auf, welche an dem jeweiligen hülsenförmigen Befestigungselement, insbesondere dem äußeren Hülsenabschnitt, und an dem jeweiligen Öffnungsrand, insbesondere Befestigungsanschlag dichtend anliegt, und/oder weist das jeweilige ringförmige Dichtungselement eine zweite Dichtungslippe auf, welche an dem jeweiligen hülsenförmigen Befestigungselement, insbesondere dem inneren Hülsenabschnitt und dem äußeren Hülsenabschnitt, dichtend anliegt, und/oder weist das jeweilige ringförmige Dichtungselement eine dritte Dichtungslippe auf, welche an dem Ventilkolben dichtend anliegt.

Insbesondere liegt die erste Dichtungslippe an dem Befestigungsanschlag des jeweiligen Öffnungsrands und an einem sich winklig von dem inneren Hülsenabschnitt erstreckenden Anlegeabschnitt des äußeren Hülsenabschnitts an.

Insbesondere liegt die zweite Dichtungslippe an dem inneren Hülsenvorsprung des inneren Hülsenabschnitts und an einem sich winklig von dem inneren Hülsenabschnitt erstreckenden Anlegeabschnitt des äußeren Hülsenabschnitts an.

In einer vorteilhaften Ausführungsform ist in dem jeweiligen hülsenförmigen Befestigungselement, insbesondere in dem inneren Hülsenabschnitt zumindest eine erste Durchflutungsöffnung gebildet, und ist in dem jeweiligen hülsenförmigen Befestigungselement, insbesondere in dem äußeren Hülsenabschnitt zumindest eine zweite Durchflutungsöffnung gebildet, wobei die erste und zweite Durchflutungsöffnung einen Hülsendurchbruch des hülsenförmigen Befestigungselements mit einem durch das jeweilige ringförmige Dichtungselement einseitig abgetrennten Dichtungsraum fluidtechnisch verbinden, um den einseitig abgetrennten Dichtungsraum mit Fluid zu beschicken und eine Anpresskraft auf das jeweilige ringförmige Dichtungselement zu bewirken.

Dadurch wird der technische Vorteil erreicht, dass durch den Hülsendurchbruch strömendes Fluid durch die erste und zweite Durchflutungsöffnung in den Dichtungsraum strömen kann, welcher durch das jeweilige ringförmige Dichtungselement einseitig abgetrennt ist, um somit das jeweilige ringförmige Dichtungselement mit einer Anpresskraft zu beaufschlagen, wodurch die Dichtungswirkung zwischen dem jeweiligen ringförmigen Dichtungselement und dem Ventilkolben sowie dem jeweiligen Öffnungsrand verbessert werden kann.

Insbesondere ist die erste Durchflutungsöffnung in einem dem jeweiligen Gehäusestutzen zugewandten Bereich des inneren Hülsenabschnitts des jeweiligen hülsenförmigen Befestigungselements gebildet.

Insbesondere ist die zweite Durchflutungsöffnung in einem sich winklig von dem inneren Hülsenabschnitt erstreckenden Anlegeabschnitt des äußeren Hülsenabschnitts des jeweiligen hülsenförmigen Befestigungselements gebildet.

Insbesondere wird der einseitig abgetrennte Dichtungsraum durch die erste, zweite und dritte Dichtungslippe des jeweiligen ringförmigen Dichtungselements einseitig abgetrennt.

Insbesondere umfasst die zumindest eine erste Durchflutungsöffnung eine einzige erste Durchflutungsöffnung oder eine Mehrzahl von ersten Durchflutungsöffnungen.

Insbesondere umfasst die zumindest eine zweite Durchflutungsöffnung eine einzige zweite Durchflutungsöffnung oder eine Mehrzahl von zweiten Durchflutungsöffnungen.

In einer vorteilhaften Ausführungsform weist die Fluidventilanordnung zumindest zwei, insbesondere vier, weitere Dichtungselemente, insbesondere Dichtungsringe, auf, welche jeweils zwischen dem jeweiligen Gehäusestutzen und dem jeweiligen Öffnungsrand angeordnet sind, wobei die weiteren Dichtungselemente insbesondere jeweils zwischen einem sich von der jeweiligen Stutzenaußenseite des jeweiligen Stutzeninnenabschnitts des jeweiligen Gehäusestutzens winklig erstreckenden Dichtungsabschnitts des jeweiligen Gehäusestutzens und dem jeweiligen Öffnungsrand angeordnet sind.

Dadurch wird der technische Vorteil erreicht, dass durch die weiteren Dichtungselemente, insbesondere Dichtungsringe eine besonders wirksame fluidtechnische Abdichtung zwischen dem jeweiligen Gehäusestutzen und dem jeweiligen Öffnungsrand sichergestellt werden kann.

Der insbesondere vorhandene Dichtungsabschnitt des jeweiligen Gehäusestutzens, an welchem das jeweilige weitere Dichtungselement anliegt, ist insbesondere ein Bestandteil des Stutzeninnenabschnitts des jeweiligen Gehäusestutzens. Dadurch, dass sich der Dichtungsabschnitt hierbei winklig, insbesondere rechtwinklig, gegenüber der jeweiligen Stutzenaußenseite des jeweiligen Stutzeninnenabschnitts erstreckt, insbesondere in Richtung des Gehäuseinnenraums des Ventilgehäuses erstreckt, wird eine vorteilhafte Positionierung des weiteren Dichtungselements innerhalb der jeweiligen Gehäuseöffnung sichergestellt.

In einer vorteilhaften Ausführungsform ist der Gehäusedeckel stoffschlüssig, insbesondere verschweißt, an dem Ventilgehäuse befestigt, oder ist der Gehäusedeckel kraftschlüssig, insbesondere durch eine Rastverbindung oder durch eine Clipverbindung, und/oder formschlüssig an dem Ventilgehäuse befestigt.

Dadurch wird der technische Vorteil erreicht, dass durch eine nicht-lösbare, z.B. stoffschlüssige Verbindung zwischen dem Gehäusedeckel und dem Ventilgehäuse eine besonders stabile Befestigung des Gehäusedeckels an dem Ventilgehäuse erreicht wird.

Durch eine insbesondere lösbare Verbindung, z.B. Rastverbindung zwischen dem Gehäusedeckels an dem Ventilgehäuse kann beispielsweise eine einfache Demontage der Fluidventilanordnung sichergestellt werden.

In einer vorteilhaften Ausführungsform sind die jeweiligen Gehäusestutzen in der jeweiligen Gehäuseöffnung drehbar angeordnet.

Dadurch wird der technische Vorteil erreicht, dass durch die drehbare Anordnung der durch den Gehäusedeckel in der jeweiligen Gehäuseöffnung fixierten jeweiligen Gehäusestutzen auch nach dem Zusammenbau der Fluidventilanordnung durch eine entsprechende Drehung der Gehäusestutzen eine besonders flexible fluidtechnische Anbindung an die jeweilige Einbausituation sichergestellt werden kann.

In einer vorteilhaften Ausführungsform weist die Fluidventilanordnung ein Fluidverteilungselement, insbesondere eine Fluidverteilungsplatte, mit zumindest zwei, insbesondere vier, Fluidkanälen auf, wobei das Ventilgehäuse an dem Fluidverteilungselement befestigt ist, und wobei jeweils ein Gehäusestutzen mit jeweils einem Fluidkanal fluidtechnisch verbunden ist.

Dadurch wird der technische Vorteil erreicht, dass durch die Anordnung des Ventilgehäuses an dem Fluidverteilungselement eine wirksame Weiterverteilung des durch das Ventilgehäuse strömenden Fluids in die entsprechenden Fluidkanäle sichergestellt wird.

In einer vorteilhaften Ausführungsform ist der jeweilige Gehäusestutzen der Fluidventilanordnung mit dem Fluidverteilungselement lösbar, insbesondere durch eine formschlüssige und/oder kraftschlüssige Verbindung, insbesondere durch eine Rastverbindung oder Schraubverbindung, verbunden ist, oder wobei der jeweilige Gehäusestutzen der Fluidventilanordnung mit dem Fluidverteilungselement nicht lösbar, insbesondere durch eine stoffschlüssige Verbindung, verbunden ist.

Dadurch wird der technische Vorteil erreicht, dass die lösbare Verbindung zwischen dem jeweilige Gehäusestutzen und dem Fluidverteilungselement vorteilhaft, z.B. bei einer Demontage, wieder gelöst werden kann, bzw. eine nicht-lösbare Verbindung eine hohe Stabilität aufweist.

In einer vorteilhaften Ausführungsform werden die zumindest zwei, insbesondere vier, Fluidkanäle jeweils durch ein Kanalgehäuse begrenzt, welches sich an einer Oberseite des Fluidverteilungselements erstreckt, wobei insbesondere an einer Oberseite des jeweiligen Fluidkanals jeweils eine Fluidkanalöffnung gebildet ist, welche mit jeweils einem Gehäusestutzen der Fluidventilanordnung fluidtechnisch verbunden ist.

Dadurch wird der technische Vorteil erreicht, dass eine besonders vorteilhafte fluidtechnische Anbindung zwischen dem jeweiligen Fluidkanal des Fluidverteilungselements und dem Gehäusestutzen der Fluidventilanordnung erreicht werden kann.

Ausführungsbeispiele der Erfindung sind in den Zeichnungen dargestellt und werden im Folgenden näher beschrieben.

Es zeigen:
- Fig. 1: eine perspektivische Ansicht einer Fluidventilanordnung gemäß einer Ausführungsform;
- Fig. 2: eine weitere perspektivische Ansicht der in Fig. 1 dargestellten Fluidventilanordnung;
- Fig. 3: eine weitere perspektivische Ansicht der in Fig. 1 dargestellten Fluidventilanordnung;
- Fig. 4: eine perspektivische Ansicht einer Dichtungsanordnung der in Fig. 1 dargestellten Fluidventilanordnung;
- Fig. 5: eine weitere perspektivische Ansicht der in Fig. 1 dargestellten Dichtungsanordnung;
- Fig. 6: eine perspektivische Ansicht einer Dichtungsanordnung gemäß einer weiteren Ausführungsform;
- Fig. 7: eine perspektivische Ansicht einer Fluidventilanordnung gemäß einer weiteren Ausführungsform;
- Fig. 8: eine perspektivische Ansicht einer Fluidventilanordnung gemäß einer weiteren Ausführungsform; und
- Fig. 9: eine perspektivische Ansicht einer Fluidventilanordnung gemäß einer weiteren Ausführungsform.

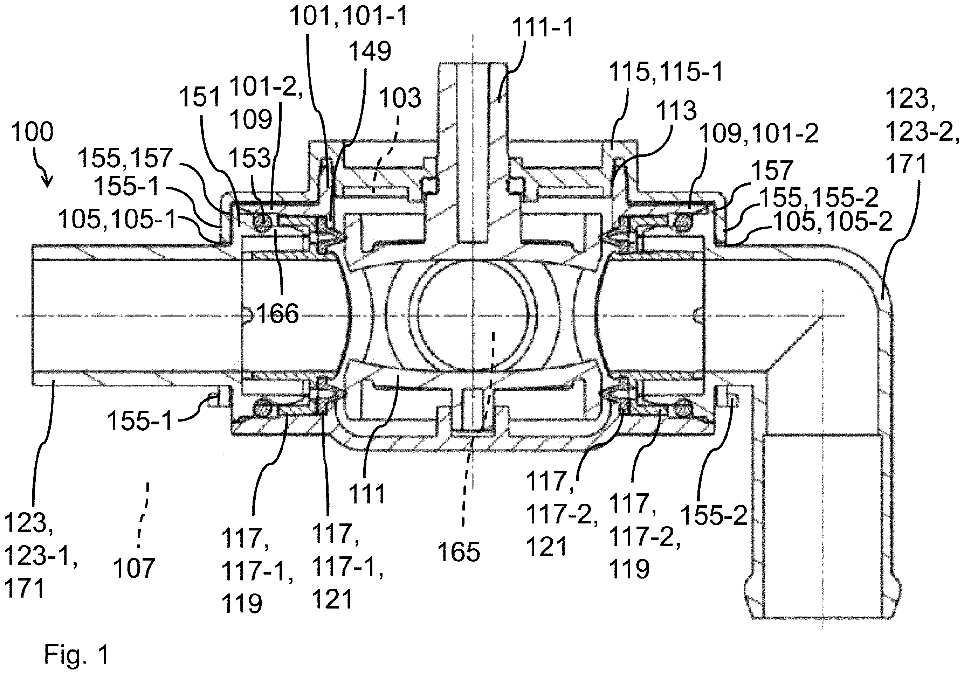

In der Fig. 1 ist die Fluidventilanordnung 100 in einer Schnittdarstellung gezeigt.

Die Fluidventilanordnung 100 gemäß der vorliegenden Offenbarung dient zum Verbinden von Fluidleitungen in einer Vielzahl von fluidführenden Systemen eines Fahrzeuges. Die Fluidventilanordnung 100 kann zur fluidtechnischen Verbindung von Kraftstoff-, Kühlflüssigkeits-, Ladeluft-, Bremsflüssigkeits-, Wasser-, SCR-, und/oder Getriebeölleitungen in Fahrzeugen eingesetzt werden. Die Fluidventilanordnung 100 kann alternativ auch beispielsweise in Kühlmittel-führende Fluidleitungen, welche zur Kühlung von Batteriezellen in einem elektrisch angetriebenen Fahrzeug verwendet werden, eingesetzt werden.

In fluidführenden Systemen eines Fahrzeuges werden unterschiedliche Fluide, wie z.B. Gase oder Flüssigkeiten, teilweise unter hohem Druck und bei hohen Temperaturen geleitet.

Aufgrund der beengten Bauraumsituation in einem Fahrzeug müssen verschiedene Leitungen der entsprechenden fluidführenden Systeme oftmals durch entsprechende Fluidventilanordnungen 100 miteinander verbunden werden, um eine wirksame Fluidleitung sicherzustellen. Hierbei werden an die fluidtechnischen Schnittstellen zwischen entsprechenden fluidführenden Leitungen an entsprechend hohe Anforderungen in Bezug auf Stabilität und Fluiddichtigkeit der Fluidventilanordnungen 100 gestellt.

Zudem soll die Fluidventilanordnung 100 gemäß der vorliegenden Offenbarung aus einer Vielzahl von einfach zu fertigenden und einfach zusammenzufügenden, insbesondere modular aufgebauten, Bauelementen gefertigt werden, um eine Fluidventilanordnung 100 bereitzustellen, welche mit einem geringen Montageaufwand und damit kostengünstig zu montieren ist.

Die Fluidventilanordnung 100 umfasst ein Ventilgehäuse 101, welches einen Gehäuseinnenraum 103 begrenzt, wobei das Ventilgehäuse 101 zumindest zwei, insbesondere vier Gehäuseöffnungen 105, 105-1, 105-2, 105-3, 105-4 aufweist. In der Fig. 1 sind jedoch nur zwei Gehäuseöffnungen 105, 105-1, 105-2 einsehbar. Die Gehäuseöffnungen 105, 105-1, 105-2, 105-3, 105-4 verbinden jeweils den Gehäuseinnenraum 103 mit einem Außenraum 107 der Fluidventilanordnung 100 fluidtechnisch. Die jeweilige Gehäuseöffnung 105, 105-1, 105-2, 105-3, 105-4 wird jeweils durch einen Öffnungsrand 109 des Ventilgehäuses 101 begrenzt.

Die Fluidventilanordnung 100 umfasst ferner einen Ventilkolben 111, welcher zwischen einer ersten und zweiten Kolbenstellung drehbar in dem Gehäuseinnenraum 103 angeordnet, und einen Fluidkanal 165 aufweist. Der Ventilkolben 111 ist ausgebildet, in der in Fig. 1 dargestellten ersten Kolbenstellung die erste und zweite Gehäuseöffnung 105-1, 105-2 zumindest teilweise, insbesondere vollständig, fluidtechnisch freizugeben und die in Fig. 1 nicht dargestellte dritte und vierte Gehäuseöffnung 105-3, 105-4 zumindest teilweise, insbesondere vollständig, fluidtechnisch zu sperren. Ein beispielsweise durch einen Elektromotor drehbarer Antriebsschaft 111-1 des Ventilkolbens 111 ist in der Fig. 1 ebenfalls dargestellt.

In einer in Fig. 1 nicht dargestellten zweiten Kolbenstellung ist der Ventilkolben 111 entsprechend ausgebildet die in Fig. 1 nicht dargestellte dritte und vierte Gehäuseöffnung 105-3, 105-4 zumindest teilweise fluidtechnisch freizugeben und die in Fig. 1 dargestellte erste und zweite Gehäuseöffnung 105-1, 105-2 zumindest teilweise fluidtechnisch zu sperren.

Hierbei weist das Ventilgehäuse 101 in einer Oberseite eine Kolbenöffnung 113 auf, durch welche der Ventilkolben 111 in den Gehäuseinnenraum 103 des Ventilgehäuses 101 eingeführt werden kann. Die Kolbenöffnung 113 wird durch einen Gehäusedeckel 115 der Fluidventilanordnung 100 verschlossen.

Insbesondere ist der Gehäusedeckel 115 als ein das Ventilgehäuse 101 zumindest abschnittsweise, insbesondere vollständig umlaufender Gehäusedeckel 115 ausgebildet.

Insbesondere weist der Gehäusedeckel 115 einen Deckeloberbereich 115-1 auf, welcher an einer Oberseite 101-1 des Ventilgehäuses 101 anliegt, wobei sich insbesondere zumindest zwei, insbesondere vier, Deckelabschnitte 155 von dem Deckeloberbereich 115-1 aus erstrecken. Jeweils einer der zumindest zwei, insbesondere vier, Deckelabschnitte 155 liegt insbesondere jeweils an einer Lateralseite 101-2 von zumindest zwei, insbesondere vier Lateralseiten 101-2 des Ventilgehäuses 101 an.

Wie in der Fig. 1 dargestellt sind insbesondere jeweils zwei der zumindest zwei, insbesondere vier Gehäuseöffnungen 105-1, 105-2 auf jeweils gegenüberliegenden Lateralseiten 101-2 des Ventilgehäuses 101 angeordnet und sind insbesondere jeweils zwei der zumindest zwei, insbesondere vier, Deckelabschnitte 155-1, 155-2 an den jeweils gegenüberliegenden Lateralseiten 101-2 des Ventilgehäuses 101 angeordnet.

Zur fluidtechnischen Abdichtung weist die Fluidventilanordnung 100 ferner zumindest zwei, insbesondere vier, Dichtungsanordnungen 117, 117-1, 117-2, 117-3, 117-4 auf, wobei jeweils eine der zumindest zwei, insbesondere vier, Dichtungsanordnungen 117, 117-1, 117-2, 117-3, 117-4 in jeweils einer der zumindest zwei, insbesondere vier, Gehäuseöffnungen 105, 105-1, 105-2, 105-3, 105-4 angeordnet ist. In der Fig. 1 ist nur die erste Dichtungsanordnung 117-1, welche in der ersten Gehäuseöffnung 105-1 angeordnet ist, und die zweite Dichtungsanordnung 117-2, welche in der zweiten Gehäuseöffnung 105-2 angeordnet ist, dargestellt.

Die Dichtungsanordnungen 117 umfassen jeweils ein hülsenförmiges Befestigungselement 119 und ein ringförmiges Dichtungselement 121.

Das jeweilige hülsenförmige Befestigungselement 119 liegt insbesondere an dem jeweiligen Öffnungsrand 109 an oder ist insbesondere mit dem jeweiligen Öffnungsrand 109 des Ventilgehäuses 101 durch eine formschlüssige oder kraftschlüssige Verbindung, insbesondere durch eine Rastverbindung, verbunden.

Wie im Nachfolgenden im Detail ausgeführt wird, beaufschlagt der jeweilige Deckelabschnitt 155 des Gehäusedeckels 115 den jeweiligen Gehäusestutzen 123 mit einer Kraft, so dass wiederum das jeweilige hülsenförmige Befestigungselement 119, welches an dem jeweiligen Gehäusestutzen 123 anliegt, gegen das jeweilige ringförmige Dichtungselement 121 gepresst wird, welches wiederum gegen den in dem Gehäuseinnenraum 103 angeordneten Ventilkolben 111 und gegen den jeweiligen Gehäuserand 109 gepresst wird, um eine fluidtechnische Abdichtung zwischen dem Ventilkolben 111 und dem jeweiligen Öffnungsrand 109 des Ventilgehäuses 101 zu bewirken.

Insbesondere weist hierbei der Öffnungsrand 109 einen Befestigungsanschlag 149 auf, an welchem das ringförmige Dichtungselement 121 dichtend anliegt, um eine fluidtechnisch dichtende Verbindung zwischen dem ringförmigen Dichtungselement 121 und dem Öffnungsrand 109 des Ventilgehäuses 101 sicherzustellen.

Somit stellt die jeweilige Dichtungsanordnung 117 in Abhängigkeit von der Kolbenstellung des Ventilkolbens 111 eine fluidtechnische Abdichtung für die jeweilige Gehäuseöffnung 105 des Ventilgehäuses 101 sicher.

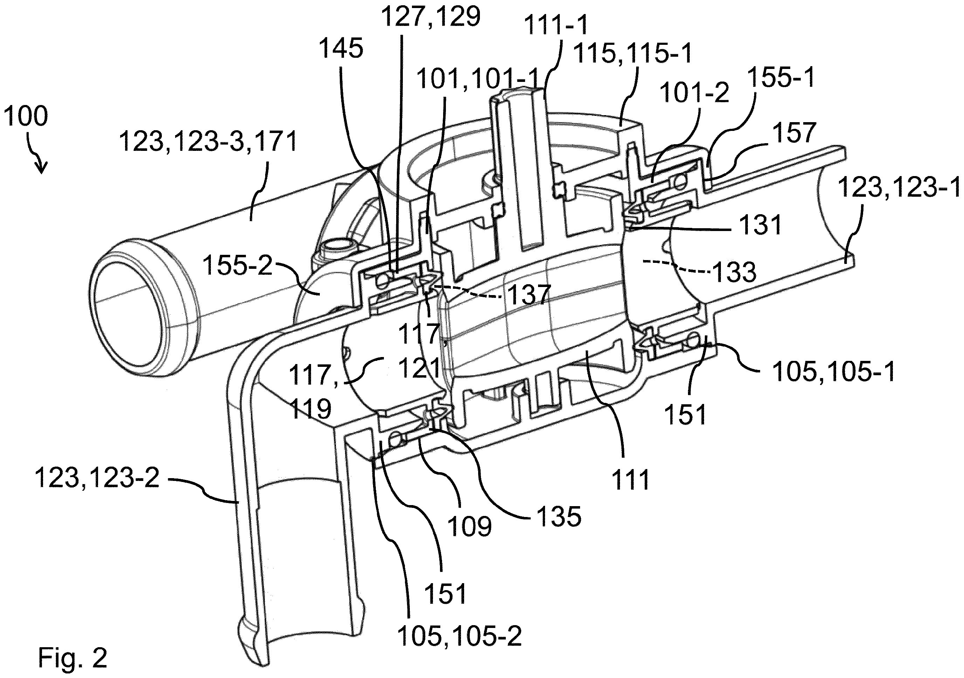

Für eine detaillierte Darstellung der Rastverbindung und der Dichtungsanordnung 117 wird auf die nachfolgende Fig. 2 verwiesen.

Die Fluidventilanordnung 100 weist ferner zumindest zwei, insbesondere vier, Gehäusestutzen 123 auf, welche jeweils an der jeweiligen Gehäuseöffnung 105 angeordnet sind. In der Fig. 1 ist nur ein erster Gehäusestutzen 123-1 und ein zweiter Gehäusestutzen 123-2 einsehbar. Die jeweiligen Gehäusestutzen 123 sind insbesondere durch eine kraftschlüssige oder formschlüssige Verbindung mit dem jeweiligen Öffnungsrand 109 verbunden.

Die Gehäusestutzen 123 weisen jeweils einen Stutzenaußenabschnitt 171 auf, welcher außerhalb der Gehäuseöffnung 105 angeordnet ist, und auf welchen insbesondere eine Fluidleitung aufgesteckt werden kann. Der erste Gehäusestutzen 123-1 weist einen sich zur Gehäuseöffnung 105 parallel erstreckenden Stutzenaußenabschnitt 171 auf. Der zweite Gehäusestutzen 123-2 weist einen Stutzenaußenabschnitt 171 auf, welcher sich zumindest abschnittsweise winklig, insbesondere rechtwinklig, zur Gehäuseöffnung 105 erstreckt.

Die Gehäusestutzen 123 weisen jeweils einen Stutzeninnenabschnitt 151 auf, welcher in der Gehäuseöffnung 105 angeordnet ist, und an der Dichtungsanordnung 117, insbesondere an dem hülsenförmigen Befestigungselement 119, anliegt. Zwischen dem Stutzeninnenabschnitt 151 und dem Öffnungsrand 109 ist ein weiteres Dichtungselement 153, insbesondere ein Dichtungsring, angeordnet, welcher eine fluidtechnische Abdichtung zwischen dem Öffnungsrand 109 und dem Stutzeninnenabschnitt 151 sicherstellt.

Das weitere Dichtungselement 153 liegt hierbei insbesondere an einem Dichtungsabschnitt 166 des Stutzeninnenabschnitts 151 an, welcher sich winklig, insbesondere rechtwinklig, von einer Stutzenaußenseite 157 des jeweiligen Stutzeninnenabschnitts 151 in Richtung des Gehäuseinnenraums 103 erstreckt.

In der Fig. 1 ist ferner ein Gehäusedeckel 115 der Fluidventilanordnung 100 dargestellt, welcher zumindest zwei, insbesondere vier Deckelabschnitte 155, 155-1, 155-2, 155-3, 155-4 aufweist, von denen in der Fig. 1 lediglich der erste und zweite Deckelabschnitt 155-1, 155-2 dargestellt ist. Der jeweilige Deckelabschnitt 155, 155-1, 155-2 liegt an dem jeweiligen Gehäusestutzen 123, 123-1, 123-2 an, insbesondere an einer Stutzenaußenseite 157 des Stutzeninnenabschnitts 151 des jeweiligen Gehäusestutzens 123, 123-1, 123-2 an. Der jeweilige Deckelabschnitt 155, 155-1, 155-2 liegt zudem an der jeweiligen Lateralseite 101-2 des Ventilgehäuses 101 an.

Der Gehäusedeckel 115 ist insbesondere nicht lösbar, insbesondere stoffschlüssig, an dem Ventilgehäuse 101 befestigt. Der Gehäusedeckel 115 ist insbesondere lösbar, insbesondere kraftschlüssig oder formschlüssig, insbesondere durch eine Rastverbindung an dem Ventilgehäuse 101 befestigt.

Wie aus der Fig. 1 ersichtlich ist, beaufschlagt der jeweilige Deckelabschnitt 155 des Gehäusedeckels 115 den Gehäusestutzen 123, insbesondere die Stutzenaußenseite 157 des Stutzeninnenabschnitts 151 des jeweils Gehäusestutzens 123, mit einer Kraft, so dass der Gehäusestutzen 123 und die an dem Gehäusestutzen 123 anliegende Dichtungsanordnung 117 gegen den Ventilkolben 111 und den jeweiligen Gehäuserand 109 des Ventilgehäuses 101 gepresst wird, um eine wirksame fluidtechnische Abdichtung sicherzustellen.

Fig. 2 zeigt eine weitere perspektivische Ansicht der in Fig. 1 dargestellten Fluidventilanordnung.

Die in der Fig. 2 dargestellte perspektivische Ansicht unterscheidet sich gegenüber der in Fig. 1 dargestellten Ansicht durch eine Drehung der Fluidventilanordnung 100 um 180° entlang einer in Fig. 2 nicht dargestellten Hochachse, welche sich entlang des Antriebsschafts 111-1 erstreckt.

Für die entsprechenden Elemente der Fluidventilanordnung 100, umfassend das Ventilgehäuse 101, den Ventilkolben 111, die Dichtungsanordnungen 117, die Gehäusestutzen 123 und den Gehäusedeckel 115 wird auf die Ausführungen zur Fig. 1 verwiesen. Neben dem bereits in der Fig. 1 dargestellten ersten und zweiten Gehäusestutzen 123-1, 123-2 ist in der Fig. 2 zusätzlich noch ein dritter Gehäusestutzen 123-3 der insgesamt vier Gehäusestutzen 123 gezeigt.

In Bezug auf die Fig. 2 wird nun auf die Befestigung der Dichtungsanordnung 117 durch den Gehäusedeckel 115 im Detail eingegangen.

Wie bereits in Bezug auf die Fig. 1 ausgeführt wurde, beaufschlagt der jeweilige Deckelabschnitt 155 des Gehäusedeckels 115 den Gehäusestutzen 123, insbesondere die Stutzenaußenseite 157 des Stutzeninnenabschnitts 151 des jeweils Gehäusestutzens 123, mit einer Kraft, so dass der Gehäusestutzen 123 und die an dem Gehäusestutzen 123 anliegende Dichtungsanordnung 117 gegen den Ventilkolben 111 und den jeweiligen Öffnungsrand 109 des Ventilgehäuses 101 gepresst wird, um eine wirksame fluidtechnische Abdichtung sicherzustellen.

Der Stutzeninnenabschnitt 151 des jeweiligen Gehäusestutzens 123 liegt wiederum an einem hülsenförmigen Befestigungselement 119 der Dichtungsanordnung 117 an.

Das hülsenförmige Befestigungselement 119 weist einen inneren Hülsenabschnitt 131 auf, welcher einen Hülsendurchbruch 133 des hülsenförmigen Befestigungselements 119 begrenzt. Das hülsenförmige Befestigungselement 119 weist einen äußeren Hülsenabschnitt 135 auf, welcher an dem Öffnungsrand 109 des Ventilgehäuses 101 anliegt.

An dem hülsenförmigen Befestigungselement 119, insbesondere an dem äußeren Hülsenabschnitt 135, ist insbesondere ein in Fig. 2 nur schematisch dargestellter Rastarm 127 mit einem Rastvorsprung 129 angeordnet, welcher in eine in Fig. 2 nur schematisch dargestellte Rastaufnahme 145 des die Gehäuseöffnung 105 begrenzenden Öffnungsrands 109 eingreift, um eine kraftschlüssige Befestigung des hülsenförmigen Befestigungselements 119 an dem Öffnungsrand 109 sicherzustellen. Die Rastaufnahme 145 ist hierbei insbesondere an einer Randinnenseite 147 des Öffnungsrands 109 angeordnet.

Zwischen dem inneren Hülsenabschnitt 131 und dem äußeren Hülsenabschnitt 135 des hülsenförmigen Befestigungselements 119 ist ein Aufnahmebereich 137 des hülsenförmigen Befestigungselements 119 angeordnet, in welchem das ringförmige Dichtungselement 121 aufgenommen ist.

Das ringförmige Dichtungselement 121 liegt hierbei insbesondere zumindest abschnittweise an dem inneren und äußeren Hülsenabschnitt 131, 135 des hülsenförmigen Befestigungselements 119 an.

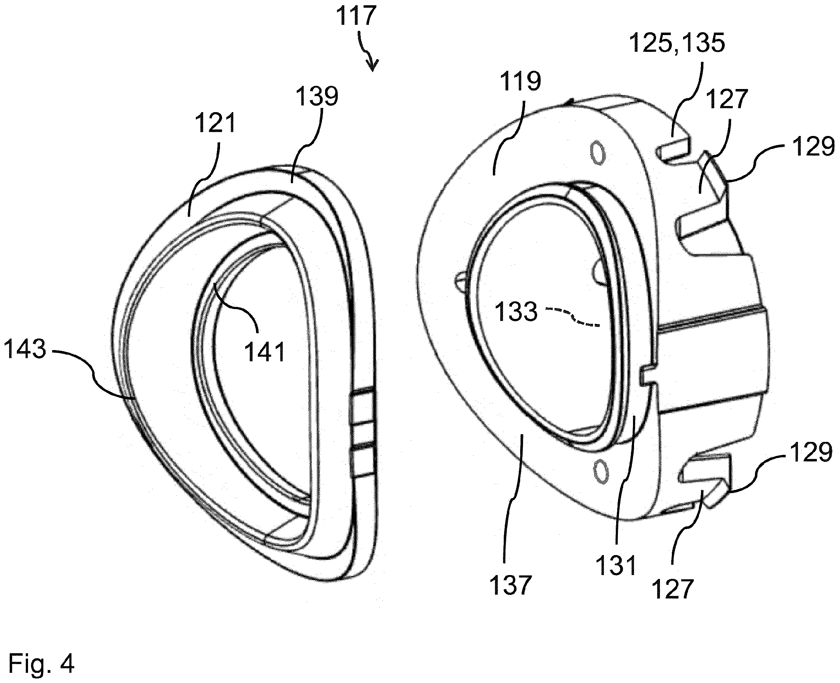

Für eine detaillierte Darstellung des Rastarms 127 des hülsenförmigen Befestigungselements 119 und des ringförmigen Dichtungselements 121 wird auf die nachfolgende Fig. 4 verwiesen.

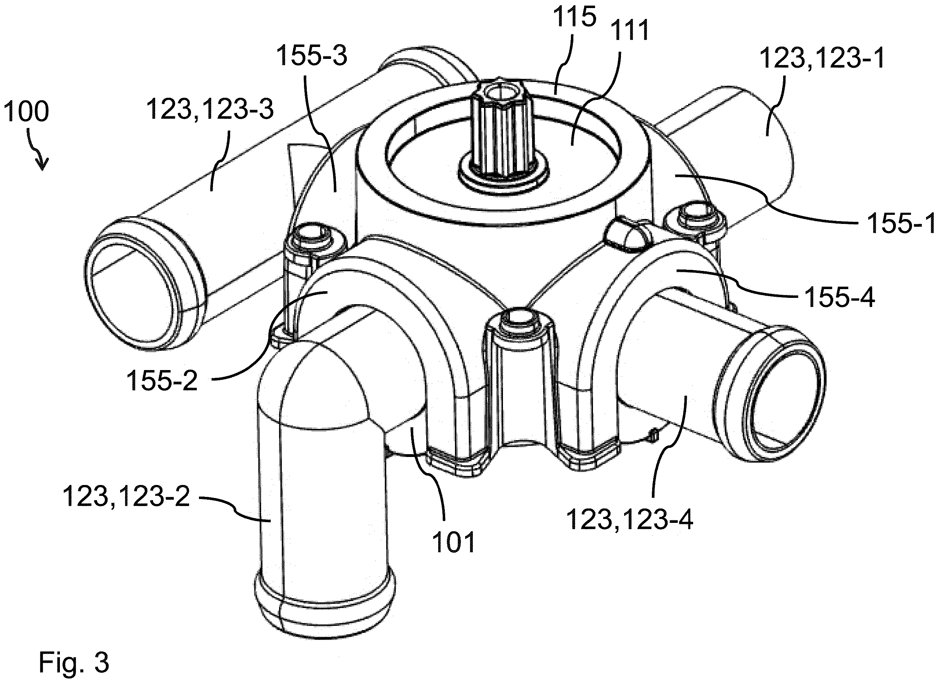

Fig. 3 zeigt eine weitere perspektivische Ansicht der in Fig. 1 dargestellten Fluidventilanordnung.

Im Gegensatz zu der in Fig. 1 dargestellten vollständigen Schnittdarstellung und der in Fig. 2 dargestellten teilweisen Schnittdarstellung ist in der Fig. 3 die Fluidventilanordnung 100 in einer perspektivischen Außenansicht gezeigt.

In der Fig. 3 sind alle vier Gehäusestutzen 123, 123-1, 123-2, 123-3, 123-4, welche in die jeweilige Gehäuseöffnung 105, 105-1, 105-2, 105-3 und 105-4 eingeführt sind und welche durch die jeweiligen Deckelabschnitte 155-1, 155-2, 155-3, 155-4 des Gehäusedeckels 115 festgelegt sind, dargestellt.

Für weitere Details wird auf die Ausführungen zur Fig. 1, Fig. 2 und Fig. 3 verwiesen.

Fig. 4 zeigt eine perspektivische Ansicht einer Dichtungsanordnung der in Fig. 1 dargestellten Fluidventilanordnung.

Es wird betont, dass die in Fig. 4 dargestellte Dichtungsanordnung 117 eine mögliche Dichtungsanordnung 117 gemäß der in den Figs. 1, 2 und 3 dargestellten Fluidventilanordnung 100 aufweist. Die in den Figs. 1, 2 und 3 dargestellte Fluidventilanordnung 100 kann jedoch beispielsweise eine Dichtungsanordnung 117 aufweisen, welche lediglich an dem Öffnungsrand 109 anliegt, und nicht mit diesem verbunden ist.

In der Fig. 4 ist die Dichtungsanordnung 117 in einer Explosionsdarstellung gezeigt, in welcher das hülsenförmige Befestigungselement 119 von dem ringförmigen Dichtungselement 121 separat dargestellt ist.

Das jeweilige ringförmige Dichtungselement 121 ist an einer dem Gehäuseinnenraum 103 des Ventilgehäuses 101 zugewandten Seite des jeweiligen hülsenförmigen Befestigungselements 119 angeordnet.

Die bereits in Bezug auf die Fig. 1 beschriebene formschlüssige oder kraftschlüssige Verbindung zwischen dem hülsenförmigen Befestigungselement 119 mit dem jeweiligen Öffnungsrand 109 des Ventilgehäuses 101 umfasst insbesondere eine Rastverbindung.

Das hülsenförmige Befestigungselement 119 weist hierbei eine Hülsenaußenseite 125 auf, welche an einer der jeweiligen Gehäuseöffnung 105 zugewandten und in Fig. 3 nicht dargestellten Randinnenseite des Öffnungsrands 109 anliegt, insbesondere formschlüssig oder kraftschlüssig anliegt.

Das hülsenförmige Befestigungselement 119, insbesondere die Hülsenaußenseite 125, weist hierbei zumindest zwei Rastarme 127, insbesondere drei Rastarme 127, auf, welche jeweils in eine in Fig. 3 nicht dargestellte Rastaufnahme 145 des Öffnungsrands 109, insbesondere an einer Randinnenseite 147 des Öffnungsrands 109, eingreifen, um das hülsenförmige Befestigungselement 119 kraftschlüssig an dem Öffnungsrand 109 zu befestigen. In der Fig. 3 ist der dritte der drei Rastarme 127 nicht einsehbar.

Die Rastarme 127 sind federelastisch ausgebildet und weisen insbesondere an einem Ende einen Rastvorsprung 129 auf.

Somit kann durch die Rastarme 127 des hülsenförmigen Befestigungselements 119 eine wirksame Befestigung der Dichtungsanordnung 117 an dem Öffnungsrand 109 des Ventilgehäuses 101 sichergestellt werden, welche durch ein Aufschwenken der Rastarme 127, z.B. bei einer Demontage, insbesondere gelöst werden kann.

Aus der Fig. 4 geht ferner hervor, dass das hülsenförmige Befestigungselement 119 einen inneren Hülsenabschnitt 131 aufweist, welcher einen Hülsendurchbruch 133 des hülsenförmigen Befestigungselements 119 zur Fluidleitung begrenzt, und einen äußeren Hülsenabschnitt 135 mit der Hülsenaußenseite 125 aufweist, welcher, bzw. welche mit dem Öffnungsrand 109 des Ventilgehäuses 101 formschlüssig oder kraftschlüssig verbunden ist.

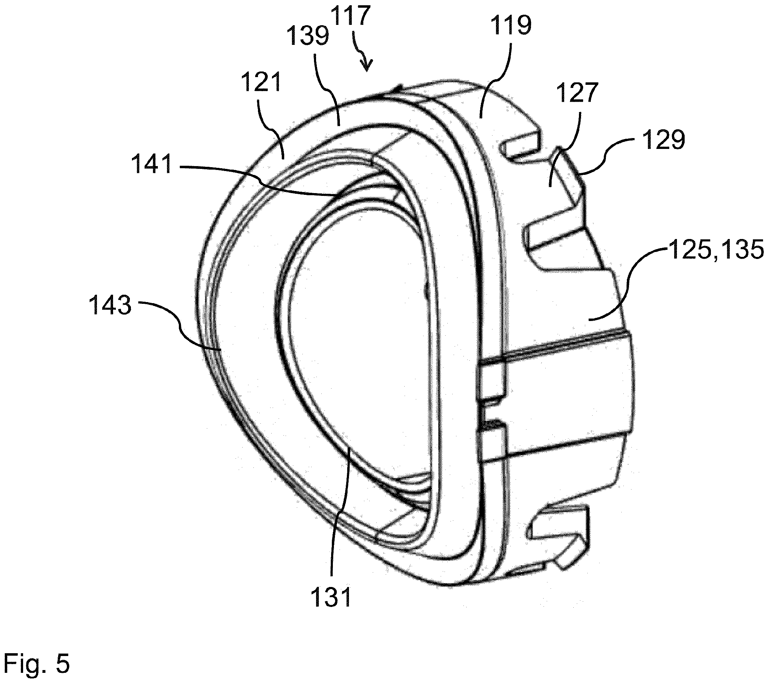

Aus der Fig. 4 geht ferner hervor, dass insbesondere zwischen dem inneren Hülsenabschnitt 131 und dem äußeren Hülsenabschnitt 135 ein dem Gehäuseinnenraum 103 des Ventilgehäuses 101 zugewandter Aufnahmebereich 137 angeordnet ist, in welchem das jeweilige ringförmige Dichtungselement 121 zumindest abschnittsweise aufgenommen ist. Für eine entsprechende Darstellung eines in dem Aufnahmebereich 137 zumindest abschnittsweise aufgenommenen ringförmigen Dichtungselements 121 wird auf die Fig. 5 verwiesen. Das ringförmige Dichtungselement 121 liegt hierbei insbesondere zumindest abschnittweise an dem inneren und äußeren Hülsenabschnitt 131, 135 des hülsenförmigen Befestigungselements 119 an.

Das ringförmige Dichtungselement 121 weist eine erste Dichtungslippe 139 auf, welche an dem hülsenförmigen Befestigungselement 119, insbesondere an dem äußeren Hülsenabschnitt 135, dichtend anliegt. Auch wenn dies aus der Fig. 3 nicht hervorgeht, liegt die erste Dichtungslippe 139 zumindest abschnittsweise an dem Öffnungsrand 109 des Ventilgehäuses 101 an.

Das ringförmige Dichtungselement 121 weist eine zweite Dichtungslippe 141 auf, welche an dem hülsenförmigen Befestigungselement 119, insbesondere an dem inneren Hülsenabschnitt 131 dichtend anliegt.

Das ringförmige Dichtungselement 121 weist eine dritte Dichtungslippe 143 auf, welche an dem in Fig. 4 nicht dargestellten Ventilkolben 111 der Fluidventilanordnung 100 dichtend anliegt. Insbesondere liegt die dritte Dichtungslippe 143 zumindest abschnittsweise auch an dem Öffnungsrand 109 des Ventilgehäuses 101 an.

Das ringförmige Dichtungselement 121 ist mit dem hülsenförmigen Befestigungselement 119 durch eine kraftschlüssige oder formschlüssige Verbindung verbunden, oder das ringförmige Dichtungselement 121 ist mit dem hülsenförmigen Befestigungselement 119 durch eine stoffschlüssige Verbindung verbunden.

Aus der Fig. 4 ist zu entnehmen, dass die Dichtungsanordnung 117 insbesondere ausschließlich aus dem ringförmige Dichtungselement 121 und dem hülsenförmigen Befestigungselement 119 besteht. Somit kann auf einen innenseitig an dem ringförmigen Dichtungselement 121 angeordneten Halter verzichtet werden, da das Befestigungselement 119 das ringförmige Dichtungselement 121 selbst gegen den Ventilkolben 111 presst und damit einen ausreichend Pressdruck für eine fluiddichte Verbindung sichergestellt werden kann.

Fig. 5 zeigt eine weitere perspektivische Ansicht der in Fig. 4 dargestellten Dichtungsanordnung.

Die in der Fig. 5 dargestellte Dichtungsanordnungen 117 entspricht der in Fig. 4 dargestellten Dichtungsanordnung 117 bis darauf, dass das ringförmige Dichtungselement 121 an dem hülsenförmigen Befestigungselement 119 angeordnet ist.

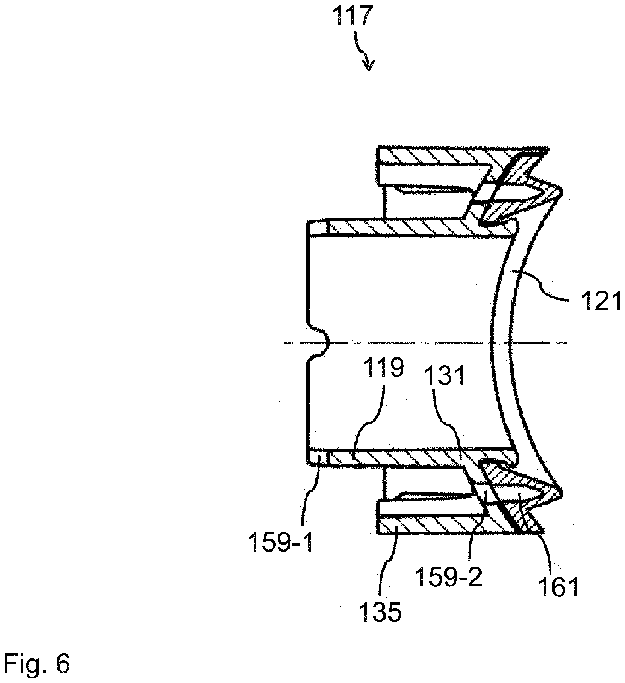

Fig. 6 zeigt eine perspektivische Ansicht einer Dichtungsanordnung gemäß einer weiteren Ausführungsform.

Die in Fig. 6 dargestellte Dichtungsanordnung 117 entspricht der in den Figuren 1 bis 5 dargestellten Dichtungsanordnung 117, bis darauf, dass die in der Schnittdarstellung gemäß der Fig. 6 dargestellte Dichtungsanordnung 117 zumindest eine erste Durchflutungsöffnung 159-1 aufweist, welche in dem hülsenförmigen Befestigungselement 119, insbesondere in dem inneren Hülsenabschnitt 131 gebildet ist, und zumindest eine zweite Durchflutungsöffnung 159-2 aufweist, welche in dem hülsenförmigen Befestigungselement 119, insbesondere in dem äußeren Hülsenabschnitt 135, angeordnet ist.

Die erste und zweite Durchflutungsöffnung 159-1, 159-2 verbinden den Hülsendurchbruch 133 fluidtechnisch mit einem durch das ringförmige Dichtungselement 121 einseitig abgetrennten Dichtungsraum 161.

Dadurch kann während der Leitung von Fluid durch den Hülsendurchbruch 133 und den Gehäusestutzen 123, das entsprechende Fluid durch die Durchflutungsöffnungen 159-1, 159-2 in den Dichtungsraum 161 einströmen und beaufschlagt das ringförmige Dichtungselement 121 mit einer Kraft, um somit die Dichtungswirkung zwischen dem ringförmigen Dichtungselement 121 und dem Ventilkolben 111 zu verbessern.

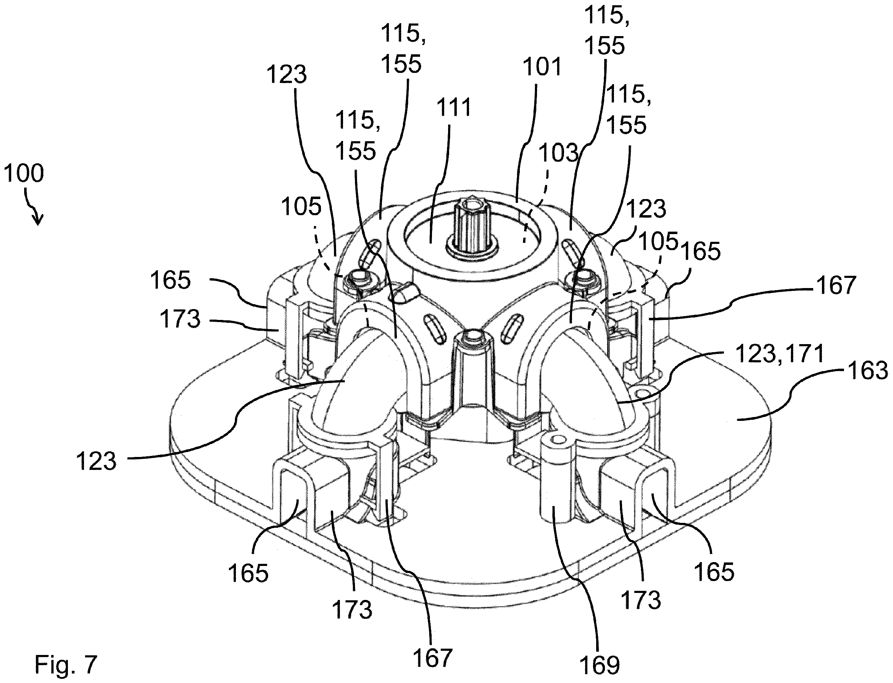

Fig. 7 zeigt eine perspektivische Ansicht einer Fluidventilanordnung gemäß einer weiteren Ausführungsform.

Die in Fig. 7 gezeigte Fluidventilanordnung 100 gemäß der weiteren Ausführungsform zeigt ein Ventilgehäuse 101 gemäß der in Fig. 1 dargestellten Fluidventilanordnung 100, welches einen Gehäuseinnenraum 103 begrenzt, in welchem ein drehbarer Ventilkolben 111 aufgenommen ist. Entsprechende in den jeweiligen Gehäuseöffnungen 105 angeordnete Dichtungsanordnungen 117 sind in der in Fig. 1 gezeigten Darstellung nicht einsehbar.

Entsprechende an den jeweiligen Gehäuseöffnungen 105 angeordnete Gehäusestutzen 123 werden durch Deckelabschnitte 155 eines Gehäusedeckels 115 festgelegt, wie in den vorangegangen Ausführungen bereits beschrieben wurde.

Die in der Fig. 7 dargestellte Fluidventilanordnung gemäß der weiteren Ausführungsform weist ferner ein Fluidverteilungselement 163, insbesondere eine Fluidverteilungsplatte, mit zumindest zwei, insbesondere vier, Fluidkanälen 165 auf.

Das Ventilgehäuse 101 ist an dem Fluidverteilungselement 163 befestigt, wobei jeweils eine Gehäuseöffnung 105 des Ventilgehäuses 101 mit jeweils einem Fluidkanal 165 fluidtechnisch verbunden ist, insbesondere durch jeweils einen Gehäusestutzen 123 der Fluidventilanordnung 100 fluidtechnisch verbunden ist.

Der jeweilige Gehäusestutzen 123 der Fluidventilanordnung 100 ist mit dem Fluidverteilungselement 163 lösbar, insbesondere durch eine formschlüssige oder kraftschlüssige Verbindung, insbesondere durch eine Rastverbindung, oder nicht lösbar, insbesondere durch eine stoffschlüssige Verbindung, verbunden. Entsprechende an den Gehäusestutzen 123 angeordnete Stutzenrastelemente 167 und Stutzenschraubelemente 169 sind in der Fig. 7 dargestellt.

Aus der Fig. 7 ist ersichtlich, dass die Fluidkanäle 165 jeweils durch ein Kanalgehäuse 173 begrenzt sind, welches sich an einer Oberseite des Fluidverteilungselements 163 erstreckt. An einer Oberseite des jeweiligen Fluidkanals 165 ist jeweils eine in der Fig. 7 nicht dargestellte Fluidkanalöffnung gebildet, welche mit dem Gehäusestutzen 123 der Fluidventilanordnung 100 fluidtechnisch verbunden ist.

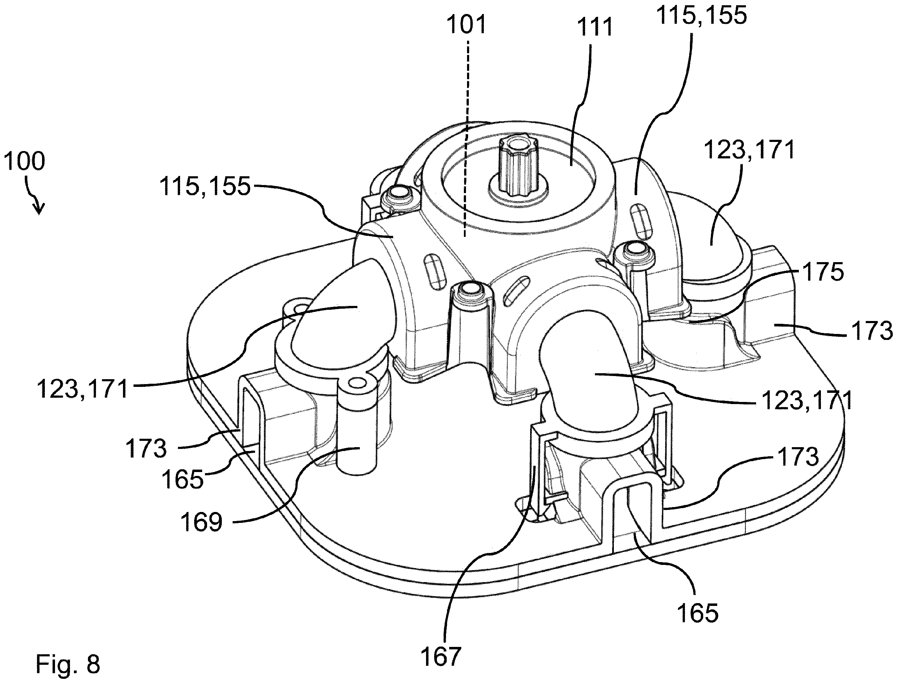

Fig. 8 zeigt eine perspektivische Ansicht einer Fluidventilanordnung gemäß einer weiteren Ausführungsform.

Die in Fig. 8 dargestellte Ausführungsform der Fluidventilanordnung 100 entspricht der in Fig. 7 dargestellten Ausführungsform der Fluidventilanordnung 100, bis darauf, dass die Ausführungsform gemäß der Fig. 8 neben dem Stutzenrastelement 167 und dem Stutzenschraubelement 169 auch noch ein Stoffschlusselement 175 aufweist, welches eine stoffschlüssige Verbindung, insbesondere eine Verschweißung, des jeweiligen Gehäusestutzens 123 mit dem Fluidverteilungselement 163 ermöglicht.

Das Stutzenrastelement 167, Stutzenschraubelement 169, und/oder das Stoffschlusselement 175 können beliebig kombiniert werden, um beliebige Gehäusestutzen 123 mit dem Fluidverteilungselement 163 zu verbinden.

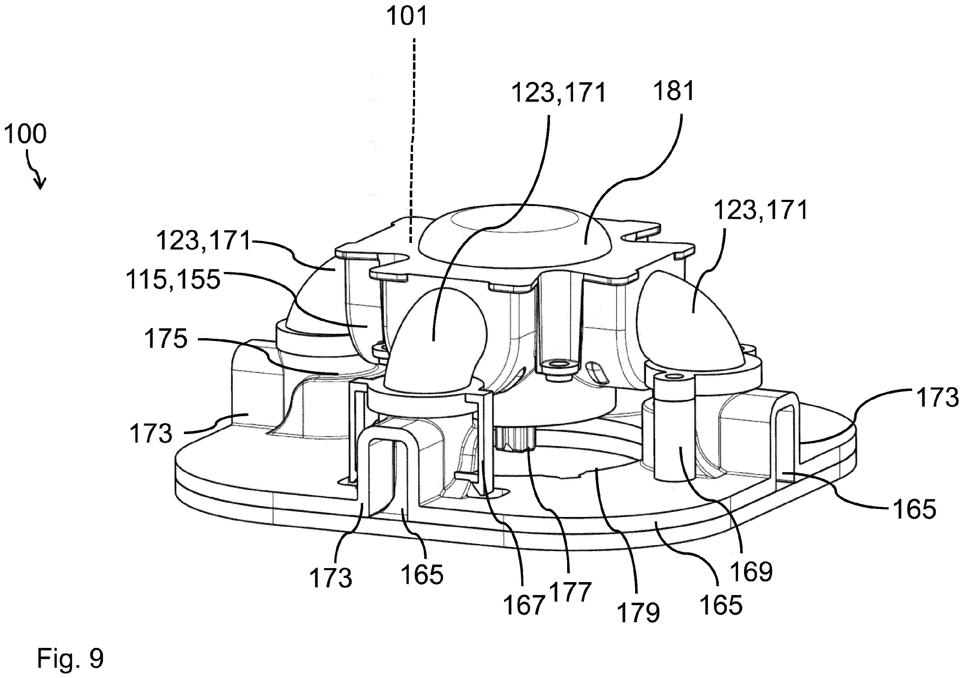

Fig. 9 zeigt eine perspektivische Ansicht einer Fluidventilanordnung gemäß einer weiteren Ausführungsform.

Die in Fig. 9 dargestellte Ausführungsform der Fluidventilanordnung 100 entspricht der in Fig. 8 dargestellten Ausführungsform der Fluidventilanordnung 100, bis darauf, dass in der Ausführungsform gemäß der Fig. 9 der Ventilkolben 111 um 180° gedreht angeordnet ist, so dass der Antriebsschaft 177 des Ventilkolbens 111 nicht an der Oberseite des Ventilgehäuses 101, sondern an der Unterseite des Ventilgehäuses 101 angeordnet ist. Somit ist der Antriebsschaft 177 an einer dem Fluidverteilungselement 165 zugewandten Seite des Ventilgehäuses 101 angeordnet.

Hierbei ist der Antriebsschaft 177 des Ventilkolbens 111 durch einen Kolbenantrieb, insbesondere Elektromotor, drehbar. Insbesondere erstreckt sich der in Fig. 9 dargestellte Antriebsschaft 177 durch eine in Fig. 9 nicht dargestellte Bodenöffnung des Ventilgehäuses 101.

Um eine wirksame Anbindung des in Fig. 9 nicht dargestellten Kolbenantriebs, insbesondere Elektromotor, an den Antriebsschaft 177 des Ventilkolbens 111 sicherzustellen, weist das Fluidverteilungselement 165 eine Antriebsöffnung 179 auf, in welcher der Kolbenantrieb zumindest abschnittsweise aufgenommen werden und mit dem Antriebsschaft 177 verbunden werden kann. Somit ist der Kolbenantrieb insbesondere zumindest abschnittweise an einer dem Ventilgehäuse 100 abgewandten Seite des Fluidverteilungselements 165 angeordnet.

Um die in dem Deckeloberbereich 115-1 des Gehäusedeckels 115 vorhandene Öffnung, welche im Gegensatz zu der Ausführungsform gemäß der Fig. 8 nicht mehr durch den Antriebsschaft 177 durchsetzt wird, wirksam zu verschließen, weist die in Fig. 8 dargestellte Fluidventilanordnung 100 eine obere Abschlussplatte 181 auf, welche an dem Deckeloberbereich 115-1 des Gehäusedeckels 115 angeordnet ist, und mit dem Gehäusedeckel 115 und/oder den Gehäusestutzen 123 verschweißt ist.

Durch die in Fig. 9 dargestellte Ausführungsform kann die Bauteilhöhe der Fluidventilanordnung 100 vorteilhaft reduziert werden, um den Einbau der Fluidventilanordnung 100 in Umgebungen sicherzustellen, in denen nur ein begrenzter Bauraum zur Verfügung steht.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidventilanordnung
- 101: Ventilgehäuse
- 101-1: Oberseite des Ventilgehäuses
- 101-2: Lateralseite des Ventilgehäuses
- 103: Gehäuseinnenraum
- 105: Gehäuseöffnung
- 105-1: Erste Gehäuseöffnung
- 105-2: Zweite Gehäuseöffnung
- 105-3: Dritte Gehäuseöffnung
- 105-4: Vierte Gehäuseöffnung
- 107: Außenraum der Fluidventilanordnung
- 109: Öffnungsrand
- 111: Ventilkolben
- 111-1: Antriebsschaft
- 113: Kolbenöffnung
- 115: Gehäusedeckel
- 115-1: Deckeloberbereich
- 117: Dichtungsanordnung
- 117-1: Erste Dichtungsanordnung
- 117-2: Zweite Dichtungsanordnung
- 117-3: Dritte Dichtungsanordnung
- 117-4: Vierte Dichtungsanordnung
- 119: Hülsenförmiges Befestigungselement
- 121: Ringförmiges Dichtungselement
- 123: Gehäusestutzen
- 123-1: Erster Gehäusestutzen
- 123-2: Zweiter Gehäusestutzen
- 123-3: Dritter Gehäusestutzen
- 123-4: Vierter Gehäusestutzen
- 125: Hülsenaußenseite
- 127: Rastarm
- 129: Rastvorsprung
- 131: Innerer Hülsenabschnitt
- 131-1: Innerer Hülsenvorsprung
- 133: Hülsendurchbruch
- 135: Äußerer Hülsenabschnitt
- 135-1: Anlageabschnitt
- 137: Aufnahmebereich
- 139: Erste Dichtungslippe
- 141: Zweite Dichtungslippe
- 143: Dritte Dichtungslippe
- 145: Rastaufnahme des Öffnungsrands
- 147: Randinnenseite des Öffnungsrands
- 149: Befestigungsanschlag
- 151: Stutzeninnenabschnitt
- 153: Weiteres Dichtungselement
- 155: Deckelabschnitt
- 155-1: Erster Deckelabschnitt
- 155-2: Zweiter Deckelabschnitt
- 155-3: Dritter Deckelabschnitt
- 155-4: Vierter Deckelabschnitt
- 157: Stutzenaußenseite des Stutzeninnenabschnitts
- 159-1: Erste Durchflutungsöffnung
- 159-2: Zweite Durchflutungsöffnung
- 161: Dichtungsraum
- 163: Fluidverteilungselement
- 165: Fluidkanal
- 166: Dichtungsabschnitt
- 167: Stutzenrastelement
- 169: Stutzenschraubelement
- 171: Stutzenaußenabschnitt
- 173: Kanalgehäuse
- 175: Stoffschlusselement
- 177: Antriebsschaft
- 179: Antriebsöffnung
- 181: Obere Abschlussplatte

## Patentansprüche

1. Fluidventilanordnung (100), umfassend:
ein Ventilgehäuse (101), welches einen Gehäuseinnenraum (103) begrenzt, wobei das Ventilgehäuse (101) zumindest zwei Gehäuseöffnungen (105, 105-1, 105-2, 105-3, 105-4) aufweist, welche jeweils den Gehäuseinnenraum (103) mit einem Außenraum (107) der Fluidventilanordnung (100) fluidtechnisch verbinden, wobei die jeweilige Gehäuseöffnung (105, 105-1, 105-2, 105-3, 105-4) jeweils durch einen Öffnungsrand (109) des Ventilgehäuses (101) begrenzt wird,
einen Ventilkolben (111), welcher drehbar in dem Gehäuseinnenraum (103) angeordnet und ausgebildet ist, die zumindest zwei Gehäuseöffnungen (105, 105-1, 105-2, 105-3, 105-4) in Abhängigkeit einer Kolbenstellung des Ventilkolbens (111) zumindest teilweise fluidtechnisch zu sperren oder zumindest teilweise fluidtechnisch freizugeben,
zumindest zwei Dichtungsanordnungen (117, 117-1, 117-2, 117-3, 117-4), wobei jeweils eine der zumindest zwei Dichtungsanordnungen (117, 117-1, 117-2, 117-3, 117-4) in jeweils einer der zumindest zwei Gehäuseöffnungen (105, 105-1, 105-2, 105-3, 105-4) angeordnet ist,
zumindest zwei Gehäusestutzen (123, 123-1, 123-2, 123-3, 123-4), wobei jeweils einer der zumindest zwei Gehäusestutzen (123, 123-1, 123-2, 123-3, 123-4) an jeweils einer der zumindest zwei Gehäuseöffnungen (105, 105-1, 105-2, 105-3, 105-4) angeordnet und ausgebildet ist, an der jeweiligen Dichtungsanordnung (117, 117-1, 117-2, 117-3, 117-4) anzuliegen, und
einen Gehäusedeckel (115), welcher an dem Ventilgehäuse (101) befestigt ist, wobei der Gehäusedeckel (115) zumindest zwei Deckelabschnitte (155, 155-1, 155-2, 155-3, 155-4) aufweist, **dadurch gekennzeichnet, dass** jeweils einer der zumindest zwei Deckelabschnitte (155, 155-1, 155-2, 155-3, 155-4) an jeweils einem der zumindest zwei Gehäusestutzen (123, 123-1, 123-2, 123-3, 123-4) anliegt, und ausgebildet ist, den jeweiligen Gehäusestutzen (123, 123-1, 123-2, 123-3, 123-4) mit einer Kraft zu beaufschlagen, um den jeweiligen Gehäusestutzen (123, 123-1, 123-2, 123-3, 123-4) und die jeweils daran anliegende Dichtungsanordnung (117, 117-1, 117-2, 117-3, 117-4) gegen den Ventilkolben (111) und den jeweiligen Öffnungsrand (109) des Ventilgehäuses (101) zu pressen, um eine fluidtechnische Abdichtung zwischen dem Ventilkolben (111) und dem jeweiligen Öffnungsrand (109) des Ventilgehäuses (101) zu bewirken.

2. Fluidventilanordnung (100) nach Anspruch 1, wobei das Ventilgehäuse (101) vier Gehäuseöffnungen (105, 105-1, 105-2, 105-3, 105-4) aufweist, wobei der Ventilkolben (111) ausgebildet ist in einer ersten Kolbenstellung eine erste Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch zu sperren und eine zweite Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch freizugeben, und wobei der Ventilkolben (111) ausgebildet ist in einer zweiten Kolbenstellung die zweite Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch zu sperren und die erste Untergruppe von jeweils zwei Gehäuseöffnungen (105, 105-1, 105-2, 105-3, 105-4) der vier Gehäuseöffnungen (105, 105-1, 105-2, 105-3, 105-4) zumindest teilweise fluidtechnisch freizugeben, wobei die Fluidventilanordnung (100) vier Dichtungsanordnungen (117, 117-1, 117-2, 117-3, 117-4) aufweist, welche jeweils in einer der vier Gehäuseöffnungen (105, 105-1, 105-2, 105-3, 105-4) angeordnet sind.

3. Fluidventilanordnung (100) nach Anspruch 1 oder 2, wobei jeweils zwei der zumindest zwei, insbesondere vier Gehäuseöffnungen (105, 105-1, 105-2, 105-3, 105-4), an jeweils gegenüberliegenden Lateralseiten (101-2) des Ventilgehäuses (101) angeordnet sind, wobei der Gehäusedeckel (115) als ein das Ventilgehäuse (101) zumindest abschnittsweise, insbesondere vollständig, umlaufender Gehäusedeckel (115) ausgebildet ist, und wobei jeweils zwei der zumindest zwei, insbesondere vier, Deckelabschnitte (155, 155-1, 155-2, 155-3, 155-4) des Gehäusedeckels (115) an den jeweils gegenüberliegenden Lateralseiten (101-2) des Ventilgehäuses (101) angeordnet sind, um den jeweiligen Gehäusestutzen (123, 123-1, 123-2, 123-3, 123-4), welche an der jeweiligen Gehäuseöffnung (105, 105-1, 105-2, 105-3, 105-4) angeordnet ist, mit einer Kraft zu beaufschlagen.

4. Fluidventilanordnung (100) nach einem der vorangehenden Ansprüche, wobei die Gehäusestutzen (123, 123-1, 123-2, 123-3, 123-4) jeweils einen Stutzeninnenabschnitt (151) aufweisen, welcher in der jeweiligen Gehäuseöffnung (105, 105-1, 105-2, 105-3, 105-4) angeordnet ist und an der jeweiligen Dichtungsanordnung (117, 117-1, 117-2, 117-3, 117-4) anliegt, wobei der jeweilige Stutzeninnenabschnitt (151) eine Stutzenaußenseite (157) aufweist, welche einem Außenraum (107) des Ventilgehäuses (101) zugewandt ist, wobei jeweils ein Deckelabschnitt (155, 155-1, 155-2, 155-3, 155-4) an jeweils einer Stutzenaußenseite (157) des jeweiligen Stutzeninnenabschnitts (151) anliegt, um den jeweiligen Gehäusestutzen (123, 123-1, 123-2, 123-3, 123-4) mit einer Kraft zu beaufschlagen.

5. Fluidventilanordnung (100) nach einem der vorangehenden Ansprüche, wobei der jeweilige Öffnungsrand (109) zumindest einen Befestigungsanschlag (149) aufweist, an welchen die jeweilige Dichtungsanordnung (117, 117-1, 117-2, 117-3, 117-4) durch den Gehäusedeckel (115) angepresst wird, um eine fluidtechnisch dichtende Verbindung zwischen der jeweiligen Dichtungsanordnung (117, 117-1, 117-2, 117-3, 117-4) und dem jeweiligen Öffnungsrand (109) des Ventilgehäuses (101) sicherzustellen.

6. Fluidventilanordnung (100) nach einem der vorangehenden Ansprüche, wobei die Dichtungsanordnungen (117, 117-1, 117-2, 117-3, 117-4) jeweils ein hülsenförmiges Befestigungselement (119) aufweisen, an welchem der jeweilige Gehäusestutzen (123, 123-1, 123-2, 123-3, 123-4) anliegt, und wobei die Dichtungsanordnungen (117, 117-1, 117-2, 117-3, 117-4) jeweils ein ringförmiges Dichtungselement (121) aufweisen, welches insbesondere an einer dem Gehäuseinnenraum (103) zugewandten Seite des jeweiligen hülsenförmigen Befestigungselements (119) angeordnet ist, wobei das jeweilige ringförmige Dichtungselement (121) fluidtechnisch dichtend an dem Ventilkolben (111) und an dem Öffnungsrand (109) der jeweiligen Gehäuseöffnung (105, 105-1, 105-2, 105-3, 105-4) anliegt, insbesondere an dem Ventilkolben (111) und an dem jeweiligen Befestigungsanschlag (149) des jeweiligen Öffnungsrands (109) anliegt.

7. Fluidventilanordnung (100) nach Anspruch 6, wobei das jeweilige hülsenförmige Befestigungselement (119) einen inneren Hülsenabschnitt (131), welcher einen Hülsendurchbruch (133) des jeweiligen hülsenförmigen Befestigungselements (119) begrenzt, und einen äußeren Hülsenabschnitt (135), welcher an dem jeweiligen Öffnungsrand (109) des Ventilgehäuses (101) anliegt, aufweist, wobei der äußere Hülsenabschnitt (135) insbesondere mit dem jeweiligen Öffnungsrand (109) verbunden ist.

8. Fluidventilanordnung (100) nach Anspruch 6 oder 7, wobei das jeweilige ringförmige Dichtungselement (121) eine erste Dichtungslippe (139) aufweist, welche an dem jeweiligen hülsenförmigen Befestigungselement (119), insbesondere dem äußeren Hülsenabschnitt (135), und an dem jeweiligen Öffnungsrand (109), insbesondere Befestigungsanschlag (149), dichtend anliegt, und/oder wobei das jeweilige ringförmige Dichtungselement (121) eine zweite Dichtungslippe (141) aufweist, welche an dem jeweiligen hülsenförmigen Befestigungselement (119), insbesondere dem inneren Hülsenabschnitt (131) und dem äußeren Hülsenabschnitt (135), dichtend anliegt, und/oder wobei das jeweilige ringförmige Dichtungselement (121) eine dritte Dichtungslippe (143) aufweist, welche an dem Ventilkolben (111) dichtend anliegt.

9. Fluidventilanordnung (100) nach Anspruch 6, 7 oder 8, wobei in dem jeweiligen hülsenförmigen Befestigungselement (119), insbesondere in dem inneren Hülsenabschnitt (131), zumindest eine erste Durchflutungsöffnung (159-1) gebildet ist, und wobei in dem jeweiligen hülsenförmigen Befestigungselement (119), insbesondere in dem äußeren Hülsenabschnitt (135), zumindest eine zweite Durchflutungsöffnung (159-2) gebildet ist, wobei die erste und zweite Durchflutungsöffnung (159-1, 159-2) einen Hülsendurchbruch (133) des hülsenförmigen Befestigungselements (119) mit einem durch das jeweilige ringförmige Dichtungselement (121) einseitig abgetrennten Dichtungsraum (161) fluidtechnisch verbinden, um den einseitig abgetrennten Dichtungsraum (161) mit Fluid zu beschicken und eine Anpresskraft auf das jeweilige ringförmige Dichtungselement (121) zu bewirken.

10. Fluidventilanordnung (100) nach einem der vorangehenden Ansprüche, wobei die Fluidventilanordnung (100) zumindest zwei, insbesondere vier, weitere Dichtungselemente (153), insbesondere Dichtungsringe, aufweist, welche jeweils zwischen dem jeweiligen Gehäusestutzen (123, 123-1, 123-2, 123-3, 123-4) und dem jeweiligen Öffnungsrand (109) angeordnet sind, wobei die weiteren Dichtungselemente (153) insbesondere jeweils zwischen einem sich von der jeweiligen Stutzenaußenseite (157) des jeweiligen Stutzeninnenabschnitts (151) des jeweiligen Gehäusestutzens (123, 123-1, 123-2, 123-3, 123-4) winklig erstreckenden Dichtungsabschnitts (166) des jeweiligen Gehäusestutzens (123, 123-1, 123-2, 123-3, 123-4) und dem jeweiligen Öffnungsrand (109) angeordnet sind.

11. Fluidventilanordnung (100) nach einem der vorangehenden Ansprüche, wobei der Gehäusedeckel (115) stoffschlüssig, insbesondere verschweißt, an dem Ventilgehäuse (101) befestigt ist, oder wobei der Gehäusedeckel (115) kraftschlüssig, insbesondere durch eine Rastverbindung oder durch eine Clipverbindung, und/oder formschlüssig an dem Ventilgehäuse (101) befestigt ist.

12. Fluidventilanordnung (100) nach einem der vorangehenden Ansprüche, wobei die jeweiligen Gehäusestutzen (123, 123-1, 123-2, 123-3, 123-4) in der jeweiligen Gehäuseöffnung (105, 105-1, 105-2, 105-3, 105-4) drehbar angeordnet sind.

13. Fluidventilanordnung (100) nach einem der vorangehenden Ansprüche, wobei die Fluidventilanordnung (100) ein Fluidverteilungselement (163), insbesondere eine Fluidverteilungsplatte, mit zumindest zwei, insbesondere vier, Fluidkanälen aufweist, wobei das Ventilgehäuse (101) an dem Fluidverteilungselement (163) befestigt ist, und wobei jeweils ein Gehäusestutzen (123, 123-1, 123-2, 123-3, 123-4) mit jeweils einem Fluidkanal (165) fluidtechnisch verbunden ist.

14. Fluidventilanordnung (100) nach Anspruch 13, wobei der jeweilige Gehäusestutzen (123, 123-1, 123-2, 123-3, 123-4) der Fluidventilanordnung (100) mit dem Fluidverteilungselement (163) lösbar, insbesondere durch eine formschlüssige und/oder kraftschlüssige Verbindung, insbesondere durch eine Rastverbindung oder Schraubverbindung, verbunden ist, oder wobei der jeweilige Gehäusestutzen (123, 123-1, 123-2, 123-3, 123-4) der Fluidventilanordnung (100) mit dem Fluidverteilungselement (163) nicht lösbar, insbesondere durch eine stoffschlüssige Verbindung, verbunden ist.

15. Fluidventilanordnung (100) nach Anspruch 13 oder 14, wobei die zumindest zwei, insbesondere vier, Fluidkanäle (165) jeweils durch ein Kanalgehäuse begrenzt werden, welches sich an einer Oberseite des Fluidverteilungselements (163) erstreckt, wobei insbesondere an einer Oberseite des jeweiligen Fluidkanals (165) jeweils eine Fluidkanalöffnung gebildet ist, welche mit jeweils einem Gehäusestutzen (123, 123-1, 123-2, 123-3, 123-4) der Fluidventilanordnung (100) fluidtechnisch verbunden ist.

## Claims

1. Fluid valve assembly (100), comprising:
a valve housing (101), which delimits a housing interior (103), wherein the valve housing (101) has at least two housing openings (105, 105-1, 105-2, 105-3, 105-4), which each fluidly connects the housing interior (103) with an outer space (107) of the fluid valve assembly (100), wherein the respective housing opening (105, 105-1, 105-2, 105-3, 105-4) is each delimited by an opening edge (109) of the valve housing (101),
a valve piston (111), which is arranged in the housing interior (103) in a rotatable manner and configured to at least partially fluidly block or at least partially fluidly unblock the at least two housing openings (105, 105-1, 105-2, 105-3, 105-4) depending on a piston position of the valve piston (111),
at least two sealing assemblies (117, 117-1, 117-2, 117-3, 117-4), wherein each one of the at least two sealing assemblies (117, 117-1, 117-2, 117-3, 117-4) is arranged in each one of the at least two housing openings (105, 105-1, 105-2, 105-3, 105-4),
at least two housing connectors (123, 123-1, 123-2, 123-3, 123-4), wherein each one of the at least two housing connectors (123, 123-1, 123-2, 123-3, 123-4) is arranged at each one of the at least two housing openings (105, 105-1, 105-2, 105-3, 105-4) and is configured to fit at the respective sealing assembly (117, 117-1, 117-2, 117-3, 117-4), and
a housing cover (115), which is fastened at the valve housing (101), wherein the housing cover (115) has at least two cover sections (155, 155-1, 155-2, 155-3, 155-4), **characterized in that** each one of at least two cover sections (155, 155-1, 155-2, 155-3, 155-4) fits at each one of the at least two housing connectors (123, 123-1, 123-2, 123-3, 123-4), and is configured to apply a force to the respective housing connector (123, 123-1, 123-2, 123-3, 123-4) in order to press the respective housing connector (123, 123-1, 123-2, 123-3, 123-4) and the sealing assembly (117, 117-1, 117-2, 117-3, 117-4) fitted thereon against the valve piston (111) and the respective opening edge (109) of the valve housing (101) in order to cause a fluid sealing between the valve piston (111) and the respective opening edge (109) of the valve housing (101).

2. Fluid valve assembly (100) according to claim 1, wherein the valve housing (101) has four housing openings (105, 105-1, 105-2, 105-3, 105-4), wherein the valve piston (111) is configured in a first piston position to at least partially fluidly block a first subgroup of two respective housing openings (105, 105-1, 105-2, 105-3, 105-4) of the four housing openings (105, 105-1, 105-2, 105-3, 105-4) and to at least partially unblock a second subgroup of two respective housing openings (105, 105-1, 105-2, 105-3, 105-4) of the four housing openings (105, 105-1, 105-2, 105-3, 105-4), and wherein the valve piston (111) is configured in a second piston position to at least partially fluidly block the second subgroup of two respective housing openings (105, 105-1, 105-2, 105-3, 105-4) of the four housing openings (105, 105-1, 105-2, 105-3, 105-4) and to at least partially unblock the first subgroup of two respective housing openings (105, 105-1, 105-2, 105-3, 105-4) of the four housing openings (105, 105-1, 105-2, 105-3, 105-4), wherein the fluid valve assembly (100) has four sealing assemblies (117, 117-1, 117-2, 117-3, 117-4), which are each arranged in one of the four housing openings (105, 105-1, 105-2, 105-3, 105-4).

3. Fluid valve assembly (100) according to claim 1 or 2, wherein each two of the at least two, in particular four housing openings (105, 105-1, 105-2, 105-3, 105-4) are arranged at respective opposite lateral sides (101-2) of the valve housing (101), wherein the housing cover (115) is formed as a housing cover (115) surrounding the valve housing (101) at least in sections, in particular completely, and wherein each two of the at least two, in particular four, cover sections (155, 155-1, 155-2, 155-3, 155-4) of the housing cover (115) are arranged at the respective opposite lateral sides (101-2) of the valve housing (101) in order to apply a force to the respective housing connector (123, 123-1, 123-2, 123-3, 123-4), which is arranged at the respective housing opening (105, 105-1, 105-2, 105-3, 105-4).

4. Fluid valve assembly (100) according to one of the preceding claims, wherein the housing connectors (123, 123-1, 123-2, 123-3, 123-4) each have a connector inner section (151), which is arranged in the respective housing opening (105, 105-1, 105-2, 105-3, 105-4) and fits at the respective sealing assembly (117, 117-1, 117-2, 117-3, 117-4), wherein the respective connector inner section (151) has an connector outer side (157), which faces an outer space (107) of the valve housing (101), wherein each a cover section (155, 155-1, 155-2, 155-3, 155-4) fits at a respective connector outer side (157) of the respective connector inner section (151) in order to apply a force to the respective housing connector (123, 123-1, 123-2, 123-3, 123-4).

5. Fluid valve assembly (100) according to one of the preceding claims, wherein the respective opening edge (109) has at least one fastening stop (149), at which the respective sealing assembly (117, 117-1, 117-2, 117-3, 117-4) is pressed onto by the housing cover (115) in order to ensure a fluidly sealing connection between the respective sealing assembly (117, 117-1, 117-2, 117-3, 117-4) and the respective opening edge (109) of the valve housing (101).

6. Fluid valve assembly (100) according to one of the preceding claims, wherein the sealing assemblies (117, 117-1, 117-2, 117-3, 117-4) each have a sleeve-shaped fastening element (119) at which the respective housing connector (123, 123-1, 123-2, 123-3, 123-4) fits, and wherein the sealing assemblies (117, 117-1, 117-2, 117-3, 117-4) each have an annular-shaped sealing element (121), which in particular is arranged at a side of the respective sleeve-shaped fastening element (119) facing the housing interior (103), wherein the respective annular-shaped sealing element (121) fits at the valve piston (111) and at the opening edge (109) of the respective housing opening (105, 105-1, 105-2, 105-3, 105-4), in particular at the valve piston (111) and at the respective fastening stop (149) of the respective opening edge (109), in a fluidly sealing manner.

7. Fluid valve assembly (100) according to claim 6, wherein the respective sleeve-shaped fastening element (119) has an inner sleeve section (131), which delimits a sleeve opening (133) of the respective sleeve-shaped fastening element (119), and an outer sleeve section (135), which fits at the respective opening edge (109) of the valve housing (101), wherein the outer sleeve section (135) is connected in particular to the respective opening edge (109).

8. Fluid valve assembly (100) according to claim 6 or 7, wherein the respective annular-shaped sealing element (121) has a first sealing lip (139), which fits at the respective sleeve-shaped fastening element (119), in particular the outer sleeve section (135), and at the respective opening edge (109), in particular fastening stop (149), in a sealing manner, and/or wherein the respective annular-shaped sealing element (121) has a second sealing lip (141), which fits at the respective sleeve-shaped fastening element (119), in particular the inner sleeve section (131), and at the outer sleeve section (135) in a sealing manner, and/or wherein the respective annular-shaped sealing element (121) has a third sealing lip (143), which fits at the valve piston (111) in a sealing manner.

9. Fluid valve assembly (100) according to claim 6, 7 or 8, wherein at least one first flow opening (159-1) is formed in the respective sleeve-shaped fastening element (119), in particular in the inner sleeve section (131), and wherein at least one second flow opening (159-2) is formed in the respective sleeve-shaped fastening element (119), in particular in the outer sleeve section (135), wherein the first and second flow openings (159-1, 159-2) fluidly connect a sleeve opening (133) of the sleeve-shaped fastening element (119) with a sealing space (161) separated on one side by the respective annular-shaped sealing element (121) in order to supply the sealing space (161) separated on one side with fluid and to cause a contact force on the respective annular-shaped sealing element (121).

10. Fluid valve assembly (100) according to one of the preceding claims, wherein the fluid valve assembly (100) has at least two, in particular four, further sealing elements (153), in particular sealing rings, which are each arranged between the respective housing connector (123, 123-1, 123-2, 123-3, 123-4) and the respective opening edge (109), wherein the further sealing elements (153) are each arranged in particular between a sealing section (166) of the respective housing connector (123, 123-1, 123-2, 123-3, 123-4), which angularly extends from the respective connector outer sides (157) of the respective connector inner section (151) of the respective housing connector (123, 123-1, 123-2, 123-3, 123-4), and the respective opening edge (109).

11. Fluid valve assembly (100) according to one of the preceding claims, wherein the housing cover (115) is fastened at the valve housing (101) in a materially integrated manner, in particular welded manner, or wherein the housing cover (115) is fastened at the valve housing (101) in a force-locking manner, in particular by a snap connection or by a clip connection, and/or in a form-fitting manner.

12. Fluid valve assembly (100) according to one of the preceding claims, wherein the respective housing connectors (123, 123-1, 123-2, 123-3, 123-4) are arranged in the respective housing opening (105, 105-1, 105-2, 105-3, 105-4) in a rotatable manner.

13. Fluid valve assembly (100) according to one of the preceding claims, wherein the fluid valve assembly (100) has a fluid distribution element (163), in particular a fluid distribution plate, with at least two, in particular four, fluid channels, wherein the valve housing (101) is fastened at the fluid distribution element (163), and wherein each a housing connector (123, 123-1, 123-2, 123-3, 123-4) is fluidly connected to a respective fluid channel (165).

14. Fluid valve assembly (100) according to claim 13, wherein the respective housing connector (123, 123-1, 123-2, 123-3, 123-4) of the fluid valve assembly (100) is connected to the fluid distribution element (163) in a detachable manner, in particular by a connection in a form-fitting manner and/or a force-locking manner, in particular by a snap connection or a screw connection, or wherein the respective housing connector (123, 123-1, 123-2, 123-3, 123-4) of the fluid valve assembly (100) is connected to the fluid distribution element (163) in a non-detachable manner, in particular by a connection in a materially-integrated manner.

15. Fluid valve assembly (100) according to claim 13 or 14, wherein the at least two, in particular four, fluid channels (165) are each delimited by a channel housing, which extends at an upper side of the fluid distribution element (163), wherein in particular at an upper side of the respective fluid channel (165) each a fluid channel opening is formed, which is fluidly connected to a housing connector (123, 123-1, 123-2, 123-3, 123-4) of the fluid valve assembly (100).

## Revendications

1. Ensemble de vanne fluidique (100), comprenant :
un boîtier de vanne (101) qui délimite un intérieur de boîtier (103), le boîtier de vanne (101) présentant au moins deux ouvertures de boîtier (105, 105-1, 105-2, 105-3, 105-4), qui chacun relie fluidiquement l'intérieur du boîtier (103) à un espace extérieur (107) de l'ensemble de vanne fluidique (100), l'ouverture du boîtier respective (105, 105-1, 105-2, 105-3, 105-4) étant chacun délimité par un bord d'ouverture (109) du boîtier de valve (101),
un piston de soupape (111), qui est disposé de manière rotative dans l'intérieur du boîtier (103) et configuré pour bloquer au moins partiellement par fluide ou au moins partiellement débloquer par fluide les au moins deux ouvertures de boîtier (105, 105-1, 105-2, 105-3, 105-4) en fonction d'une position du piston de soupape (111),
au moins deux ensembles d'étanchéité (117, 117-1, 117-2, 117-3, 117-4), chacun des au moins deux ensembles d'étanchéité (117, 117-1, 117-2, 117-3, 117-4) est disposé dans chacune des au moins deux ouvertures de boîtier (105, 105-1, 105-2, 105-3, 105-4),
au moins deux connecteurs de boîtier (123, 123-1, 123-2, 123-3, 123-4), chacun des au moins deux connecteurs de boîtier (123, 123-1, 123-2, 123-3, 123-4) est disposé au niveau de chacune des au moins deux ouvertures de boîtier (105, 105-1, 105-2, 105-3, 105-4) et est configuré pour s'adapter à l'ensemble d'étanchéité respectif (117, 117-1, 117-2, 117-3, 117-4), et
un couvercle de boîtier (115) qui est fixé sur le boîtier de vanne (101), le couvercle de boîtier (115) comportant au moins deux sections de couvercle (155, 155-1, 155-2, 155-3, 155-4), **caractérisé en ce que** chacune d'au moins deux sections de couvercle (155, 155-1, 155-2, 155-3, 155-4) s'adapte à chacun des au moins deux connecteurs de boîtier (123, 123-1, 123-2, 123-3, 123-4), et est configuré pour appliquer une force sur le connecteur de boîtier respectif (123, 123-1, 123-2, 123-3, 123-4) afin d'appuyer sur le boîtier respectif connecteur (123, 123-1, 123-2, 123-3, 123-4) et l'ensemble d'étanchéité (117, 117-1, 117-2, 117-3, 117-4) monté sur celui-ci contre le piston de vanne (111) et le bord d'ouverture respectif (109) du boîtier de vanne (101) afin de provoquer une étanchéité fluidique entre le piston de vanne (111) et le bord d'ouverture respectif (109) du boîtier de vanne (101).

2. Ensemble de vanne fluidique (100) selon la revendication 1, dans lequel le boîtier de vanne (101) comporte quatre ouvertures de boîtier (105, 105-1, 105-2, 105-3, 105-4), dans lequel le piston de vanne (111) est configuré dans une première position de piston pour bloquer au moins partiellement fluidiquement un premier sous-groupe de deux ouvertures de boîtier respectives (105, 105-1, 105-2, 105-3, 105-4) des quatre ouvertures de boîtier (105, 105-1, 105-2, 105-3, 105-4) et pour débloquer au moins partiellement un deuxième sous-groupe de deux ouvertures de boîtier respectives (105, 105-1, 105-2, 105-3, 105-4) du quatre ouvertures de boîtier (105, 105-1, 105-2, 105-3, 105-4), et dans lequel le piston de soupape (111) est configuré dans une seconde position de piston pour bloquer au moins partiellement le fluide du deuxième sous-groupe de deux ouvertures de boîtier respectives (105, 105-1, 105-2, 105-3, 105-4) des quatre ouvertures de boîtier (105, 105-1, 105-2, 105-3, 105-4) et pour débloquer au moins partiellement le premier sous-groupe de deux ouvertures de boîtier respectives (105, 105-1, 105-2, 105-3, 105-4) des quatre ouvertures de boîtier (105, 105-1, 105-2, 105-3, 105-4), dans lequel l'ensemble de vanne fluidique (100) comporte quatre ensembles d'étanchéité (117, 117-1, 117-2, 117-3, 117-4), qui sont chacun disposé dans l'une des quatre ouvertures du boîtier (105, 105-1, 105-2, 105-3, 105-4).

3. Ensemble de vanne fluidique (100) selon la revendication 1 ou 2, dans lequel chacune des au moins deux, en particulier quatre ouvertures de boîtier (105, 105-1, 105-2, 105-3, 105-4) est disposée sur les côtés latéraux opposés (101-2) du boîtier de vanne (101), le couvercle de boîtier (115) étant formé comme un couvercle de boîtier (115) entourant le boîtier de vanne (101) au moins par endroits, en particulier complètement, et dans lequel chacune des deux au moins, en particulier quatre, sections de couvercle (155, 155-1, 155-2, 155-3, 155-4) du couvercle de boîtier (115) est disposée sur les côtés latéraux opposés respectifs (101-2) du boîtier de vanne (101) afin d'appliquer une force sur le connecteur de boîtier respectif (123, 123-1, 123-2, 123-3, 123-4), qui est disposé au niveau du boîtier respectif ouverture (105, 105-1, 105-2, 105-3, 105-4).

4. Ensemble de vanne fluidique (100) selon l'une des revendications précédentes, dans lequel les connecteurs de boîtier (123, 123-1, 123-2, 123-3, 123-4) ont chacun une section intérieure de connecteur (151), qui est disposé dans l'ouverture du boîtier respective (105, 105-1, 105-2, 105-3, 105-4) et s'adapte à l'ensemble d'étanchéité respectif (117, 117-1, 117-2, 117-3, 117-4), dans lequel la section intérieure de connecteur respective (151) présente un côté extérieur de connecteur (157), qui fait face à un espace extérieur (107) du boîtier de vanne (101), dans lequel chaque section de couvercle (155, 155-1, 155-2, 155-3, 155-4) s'ajuste sur un côté extérieur de connecteur respectif (157) de la section intérieure de connecteur respective (151) afin d'appliquer une force sur le connecteur de boîtier respectif (123, 123-1, 123-2, 123-3, 123-4).

5. Ensemble de vanne fluidique (100) selon l'une des revendications précédentes, dans lequel le bord d'ouverture respectif (109) présente au moins une butée de fixation (149), au niveau de laquelle l'ensemble d'étanchéité respectif (117, 117-1, 117-2, 117-3, 117-4) est pressé par le couvercle du boîtier (115) afin d'assurer une liaison fluidiquement étanche entre l'ensemble d'étanchéité respectif (117, 117-1, 117-2, 117-3, 117-4) et le bord d'ouverture respectif (109) du boîtier de vanne (101).

6. Ensemble de vanne fluidique (100) selon l'une des revendications précédentes, dans lequel les ensembles d'étanchéité (117, 117-1, 117-2, 117-3, 117-4) comportent chacun un élément de fixation en forme de manchon (119) auquel le connecteur de boîtier respectif (123, 123-1, 123-2, 123-3, 123-4) s'adapte, et dans lequel les ensembles d'étanchéité (117, 117-1, 117-2, 117-3, 117-4) comportent chacun un élément d'étanchéité de forme annulaire (121), qui est notamment disposé sur un côté de l'élément de fixation en forme de manchon respectif (119) tourné vers l'intérieur du boîtier (103), l'élément d'étanchéité de forme annulaire respectif (121) s'adapte au piston de soupape (111) et au bord d'ouverture (109) de l'ouverture du boîtier respective (105, 105-1, 105-2, 105-3, 105-4), en particulier au piston de soupape (111) et au niveau de la butée de fixation respective (149) du bord d'ouverture respectif (109), de manière étanche aux fluides.

7. Ensemble de vanne fluidique (100) selon la revendication 6, dans lequel l'élément de fixation en forme de manchon respectif (119) présente une section de manchon interne (131), qui délimite une ouverture de manchon (133) de l'élément de fixation en forme de manchon respectif (119), et une section de manchon externe (135), qui s'adapte au bord d'ouverture respectif (109) du boîtier de vanne (101), la section de manchon externe (135) étant reliée en particulier au bord d'ouverture respectif (109).

8. Ensemble de vanne fluidique (100) selon la revendication 6 ou 7, dans lequel l'élément d'étanchéité de forme annulaire respectif (121) présente une première lèvre d'étanchéité (139), qui s'ajuste sur l'élément de fixation en forme de manchon respectif (119), dans en particulier la section de manchon extérieure (135) et au niveau du bord d'ouverture respectif (109), en particulier la butée de fixation (149), de manière étanche, et/ou dans lequel l'élément d'étanchéité de forme annulaire respectif (121) présente une deuxième fermeture d'étanchéité lèvre (141), qui s'ajuste de manière étanche sur l'élément de fixation en forme de manchon (119) respectif, en particulier sur la section de manchon interne (131), et sur la section de manchon externe (135), et/ou dans laquelle la bague annulaire respective l'élément d'étanchéité (121) en forme comporte une troisième lèvre d'étanchéité (143) qui s'ajuste de manière étanche au piston de soupape (111).

9. Ensemble de vanne fluidique (100) selon la revendication 6, 7 ou 8, dans lequel au moins une première ouverture d'écoulement (159-1) est formée dans l'élément de fixation en forme de manchon respectif (119), en particulier dans la section intérieure du manchon (131), et dans lequel au moins une seconde ouverture d'écoulement (159-2) est formée dans l'élément de fixation en forme de manchon respectif (119), en particulier dans la section de manchon externe (135), dans lequel les première et seconde ouvertures d'écoulement (159-1, 159-2) relient fluidiquement une ouverture de manchon (133) de l'élément de fixation en forme de manchon (119) avec un espace d'étanchéité (161) séparé d'un côté par l'élément d'étanchéité de forme annulaire respectif (121) afin pour alimenter en fluide l'espace d'étanchéité (161) séparé d'un côté et pour provoquer une force de contact sur l'élément d'étanchéité de forme annulaire respectif (121).

10. Ensemble de vanne fluidique (100) selon l'une des revendications précédentes, dans lequel l'ensemble de soupape à fluide (100) présente au moins deux, en particulier quatre, autres éléments d'étanchéité (153), en particulier des bagues d'étanchéité, qui sont disposés chacun entre le connecteur de boîtier respectif (123, 123-1, 123-2, 123-3, 123-4) et le bord d'ouverture respectif (109), les autres éléments d'étanchéité (153) étant disposés chacun en particulier entre une section d'étanchéité (166) du connecteur de boîtier respectif (123, 123-1, 123-2, 123-3, 123-4), qui s'étend angulairement depuis les côtés extérieurs (157) du connecteur respectif de la section intérieure (151) du connecteur respectif du connecteur de boîtier respectif (123, 123-1, 123-2, 123-3, 123-4), et le bord d'ouverture respectif (109).

11. Ensemble de vanne fluidique (100) selon l'une des revendications précédentes, dans lequel le couvercle de boîtier (115) est fixé au boîtier de vanne (101) de manière intégrée matériellement, en particulier de manière soudée, ou dans lequel le couvercle de boîtier (115) est fixé au boîtier de valve (101) par verrouillage forcé, en particulier par encliquetage ou par clipsage, et/ou par ajustement de forme.

12. Ensemble de vanne fluidique (100) selon l'une des revendications précédentes, dans lequel les connecteurs de boîtier respectifs (123, 123-1, 123-2, 123-3, 123-4) sont disposés dans l'ouverture de boîtier respective (105, 105-1, 105-2, 105-3, 105-4) de manière rotative.

13. Ensemble de vanne fluidique (100) selon l'une des revendications précédentes, dans lequel l'ensemble de vanne fluidique (100) comporte un élément de distribution de fluide (163), en particulier une plaque de distribution de fluide, avec au moins deux, notamment quatre, canaux, dans lequel le boîtier de vanne (101) est fixé à l'élément de distribution de fluide (163), et dans lequel chaque connecteur de boîtier (123, 123-1, 123-2, 123-3, 123-4) est relié fluidiquement à un canal de fluide respectif (165).

14. Ensemble de vanne fluidique (100) selon la revendication 13, dans lequel le connecteur de boîtier respectif (123, 123-1, 123-2, 123-3, 123-4) de l'ensemble de vanne à fluide (100) est connecté au fluide l'élément de distribution (163) de manière amovible, en particulier par une liaison par ajustement de forme et/ou par verrouillage forcé, en particulier par une liaison par encliquetage ou une liaison vissée, ou dans lequel le connecteur de boîtier respectif (123, 123-1, 123-2, 123-3, 123-4) de l'ensemble de vanne fluidique (100) est relié à l'élément de distribution de fluide (163) de manière non détachable, notamment par une liaison dans un matériau manière intégrée.

15. Ensemble de vanne fluidique (100) selon la revendication 13 ou 14, dans lequel les au moins deux, en particulier quatre, canaux fluidiques (165) sont chacun délimités par un boîtier de canal, qui s'étend au niveau d'un côté supérieur de l'élément de distribution de fluide (163), dans lequel en particulier sur un côté supérieur du canal de fluide respectif (165) est formée chacune une ouverture de canal de fluide qui est reliée fluidiquement à un connecteur de boîtier (123, 123-1, 123-2, 123-3, 123-4) de l'ensemble de vanne fluidique (100).
